# EUROPÄISCHE PATENTSCHRIFT

(11) **EP 2 624 999 B1**
(45) Veröffentlichungstag und Bekanntmachung des Hinweises auf die Patenterteilung: **04.05.2022**
(21) Anmeldenummer: 11772875.8
(22) Anmeldetag: 29.09.2011
(51) Int. Cl.: B24B 13/06, B24B 13/00, B24B 1/00, B24B 13/005

(54) **VORRICHTUNG UND VERFAHREN ZUM BEARBEITEN EINER OPTISCHEN LINSE**
APPARATUS AND METHOD FOR WORKING AN OPTICAL LENS
DISPOSITIF ET PROCÉDÉ D'USINAGE D'UNE LENTILLE OPTIQUE,

(30) Priorität: 05.11.2010 EP 10014335; 04.10.2010 EP 10013265; 17.11.2010 EP 10014693
(43) Veröffentlichungstag der Anmeldung: 14.08.2013
(73) Patentinhaber: Schneider GmbH & Co. KG, 35112 Fronhausen (DE)
(72) Erfinder: SCHNEIDER, Gunter, 35037 Marburg (DE)
(74) Vertreter: Von Rohr Patentanwälte Partnerschaft mbB
(86) Internationale Anmeldenummer: PCT/EP2011/004867
(87) Internationale Veröffentlichungsnummer: WO 2012/045411

(56) Entgegenhaltungen:
- EP-A1- 1 894 673
- EP-A1- 1 927 432
- WO-A1-01/53038
- WO-A1-2006/046558
- WO-A1-2008/046723
- DE-A1- 19 804 542
- DE-A1-102006 049 375
- DE-A1-102008 041 945
- DE-U1- 20 116 824
- US-A1- 2009 302 122

## Beschreibung

Die vorliegende Erfindung betrifft eine Vorrichtung zum Bearbeiten einer optischen Linse, sowie ein Verfahren zum Bearbeiten einer optischen Linse.

Eine optische Linse, beispielsweise für eine Brille, soll bestimmte optische Eigenschaften aufweisen. Die damit einhergehenden gewünschten optischen Daten der Linse werden beispielsweise von einem Augenoptiker bestimmt. Diese Daten umfassen zum Beispiel die Angabe der Dioptrien, Daten zu Sphäre und Zylinder, zum pantoskopischen Winkel etc. Weiter können diese gewünschten optischen Daten auch den Abstand und/oder die Lage zu einem zugeordneten Auge, insbesondere bei Einbau in ein bestimmtes Brillengestell, also z. B. pantoskopischer Winkel, Gesichtsformwinkel bzw. Fassungsscheibenwinkel, Pupillenabstand, etc. enthalten.

Früher wurden Linsen mit vorbestimmten optischen Daten, beispielsweise mit in verschiedenen Stufen erhältlichen Dioptrien, eingesetzt. Zunehmend werden jedoch Linsen eingesetzt, die die jeweils gewünschten, individualisierten optischen Daten bzw. die damit einhergehenden optischen Eigenschaften aufweisen. Derartige Linsen werden dann in Abhängigkeit von den jeweils gewünschten optischen Daten bearbeitet bzw. gefertigt, wobei die Linsen insbesondere mit so genannten Freiformflächen versehen werden (beispielsweise Gleitsichtgläser etc.). Die nachfolgende Beschreibung und die vorliegende Erfindung bezieht sich auf solche Linsen bzw. Linsenrohlinge, die gemäß den gewünschten, individualisierten optischen Daten bearbeitet und insbesondere mit so genannten Freiformflächen versehen werden.

Die gewünschten optischen Daten werden bisher üblicherweise an einen Großbetrieb, wie ein Zentrallabor o. dgl., übermittelt, wo aus den gewünschten optischen Daten mittels eines Designmodells in einer zentralen, von den Bearbeitungsmaschinen getrennten und unabhängigen Verarbeitungseinrichtung die entsprechenden geometrischen Daten der Linse bestimmt werden. Die so gewonnenen geometrischen Daten der Linse werden einer zentralen Prozess- und Ablaufsteuerung übermittelt. Untersysteme generieren dann entsprechende Bearbeitungsaufträge mit Fertigungsdaten für verschiedene Bearbeitungsmaschinen, um die Linsen in Abhängigkeit von den bestimmten geometrischen Daten zu bearbeiten. Diese Datenverarbeitung erfordert neben der teilweise problematischen Übertragung der gewünschten optischen Daten vom Optiker an den Großbetrieb einen außerordentlich hohen Hardware-, Software- und Maschinenaufwand, insbesondere werden hierzu üblicherweise entsprechende Server und Computernetzwerke eingesetzt. Der Betrieb erfordert außerdem den Einsatz von speziell geschultem Personal. Dementsprechend ist auch der Personalaufwand hoch.

Hinsichtlich des bisher erforderlichen Aufwands und der erforderlichen Einbindung von Serversystemen bzw. in Computernetzwerke oder dem Internet wird beispielhaft auf die US 5,808,894 A, die US 2004/0246440 A1 und die WO 2010/040757 A1 verwiesen.

Die zuvor erläuterte, komplexe und mehrstufige Organisation der Bearbeitung von optischen Linsen ist in Bezug auf den Bearbeitungsablauf bereits verbessert worden. Die DE 10 2007 007 188 A1 offenbart ein Bearbeitungszentrum zum Bearbeiten einer optischen Linse aus Kunststoff. Dieses Bearbeitungszentrum weist eine um eine Rotationsachse rotierende Werkstückspindel mit einer Aufnahme für eine Linse auf. Das Bearbeitungszentrum weist weiter eine Bearbeitungseinrichtung mit einem Fräswerkzeug, eine Bearbeitungseinrichtung mit einem Drehwerkzeug, eine Poliereinrichtung, eine Reinigungseinrichtung und eine Graviereinrichtung auf. Die Werkstückspindel ist in Richtung der Rotationsachse und quer dazu bewegbar, um die Linse den verschiedenen Einrichtungen zuzuführen und die verschiedenen Bearbeitungen zu ermöglichen und dabei insbesondere die gewünschten Freiformflächen an den Linsen zu erzeugen.

Von einer Steuerung des Bearbeitungszentrums ist in der DE 10 2007 007 188 A1 nicht die Rede. Es ist jedoch davon auszugehen, dass das Bearbeitungszentrum eine computergestützte Steuereinrichtung, wie eine CNC-Steuerung, aufweist, so dass die verschiedenen Einrichtungen in üblicher Weise entsprechend vorgegebener Fertigungsdaten arbeiten können. Das bekannte Bearbeitungszentrum muss zum Betrieb dann dementsprechend an ein Computernetzwerk o. dgl. zur Bereitstellung der Fertigungsdaten angeschlossen werden.

Die DE 198 04 542 A1 betrifft die Randbearbeitung eines Brillenglases. Aus eingegebenen optometrischen Daten, Brillengestelldaten, Angaben zum Augendurchblickpunkt und weiteren Kundendaten wird in einem Rechner ein Rohglas hinsichtlich des erforderlichen Durchmessers, der Radien der optischen Vorderfläche und Rückfläche sowie die optimale Mittendicke, abhängig von der Art des Brillenmaterials, berechnet und durch Datenfernübertragung an einen Brillenglashersteller zwecks Erstellung eines Rohglases übermittelt. Das vom Glashersteller gelieferte Rohglas wird dann durch Formbearbeiten bzw. Formschleifen fertig bearbeitet. Dies bedeutet, dass der Rand des Rohglases an das Brillengestell angepasst und hierbei ggf. mit einer Facette, einer Nut oder einer Fase versehen wird. Die Formbearbeitung bezieht sich bei der DE 198 04 542 A1 auf die Randearbeitung. Die DE 198 04 542 A1 offenbart dabei auch ein optionales Bearbeiten einer optischen Oberfläche des Rohglases, aber ohne diesbezüglich Einzelheiten anzugeben. Aufgrund des Kontextes und des in der DE 198 04 542 A1 gezeigten Aufbaus der Schleifvorrichtung handelt es sich hierbei offensichtlich um eine Bearbeitung des Randes, jedoch nicht um eine Bearbeitung der Vorder- oder Rückseite zur Erreichung gewünschter optischer Werte bzw. Eigenschaften bei dem Brillenglas handelt.

Die DE 198 04 542 A1 offenbart ein Einlesen von Daten auf Datenträgern, mittels eines Abtastgeräts oder eines Sensors zum Einlesen von Daten, beispielsweise in Form eines Strichcodes, von einem Brillenglas, von einem Brillengestell oder von einem Transportbehältnis für Brillengläser. Weiter ist auch eine entsprechende Eingabeeinrichtung zur Eingabe entsprechender Daten vorgesehen. Die DE 198 04 542 A1 befasst sich nicht im Einzelnen mit der Bestimmung von geometrischen Daten aus optischen Daten und gibt dementsprechend auch keine Hinweise bezüglich einer erforderlichen Freigabe für eine solche Bestimmung.

Die EP 1 894 673 A1, die die Basis für die Oberbegriffe der Ansprüche 1 und 12 bildet, und US 2008/0055542 A1 betreffen das Anpassen von Linsen an ein Brillengestell. Die Linsen werden von einem Blockstück gehalten, das mit einem elektronischen Identifikationselement, insbesondere einem RFID-Element, versehen ist, das seinerseits einen Identifikationscode enthält. Der Identifikationscode wird Linsendaten der vom Blockstück gehaltenen Linse zugeordnet. Diese Linsendaten können mittels des Identifikationscodes von einem Computer abgerufen und für die Bearbeitung der Linse zur Anpassung an das Gestell verwendet werden. Es geht hier jedoch nicht um die formgebende Bearbeitung einer Vorder- oder Rückseite der Linse.

Die WO 2006/046558 A1 und die EP 1 847 869 A1 betreffen die Randbearbeitung von Brillengläsern. Ein Bestimmen von geometrischen Daten oder Fertigungsdaten aus gewünschten optischen Daten erfolgt nicht. Entsprechend wird auch kein Hinweis hinsichtlich einer Freischaltung einer solchen Bestimmung gegeben. Vielmehr geht es hier um die Anpassung eines Brillenglases an ein Brillengestell.

Die US 2009/0302122 A1 offenbart eine Linse mit einem Hologramm, das Daten zur Identifikation und/oder sonstige Informationen, ggf. in kodierter Form, enthält.

Die DE 10 2008 041 954 A1 offenbart einen Transportbehälter für Brillengläser mit einem Transponder oder Chip zur Identifikation.

Die DE 201 16 824 U1 betrifft eine Vorrichtung zur Handhabung einer Linse, wobei die Vorrichtung eine Codierung mit allen einen Arbeitsauftrag betreffenden Informationen aufweisen kann. Als Kodierung kann ein Datenspeicher eingesetzt werden, der optisch, magnetisch oder elektronisch auslesbar ist.

Der vorliegenden Erfindung liegt die Aufgabe zugrunde, eine Vorrichtung, eine optische Linse, ein Transportbehältnis für optische Linsen und ein Verfahren zum Bearbeiten einer optischen Linse anzugeben, wobei eine Bearbeitung insbesondere vor Ort, beispielsweise direkt bei einem Optiker o. dgl., und/oder mit geringem Organisationsaufwand erfolgen kann.

Die obige Aufgabe wird durch eine Vorrichtung gemäß Anspruch 1, durch eine optische Linse gemäß Anspruch 25, durch ein Transportbehältnis gemäß Anspruch 35 oder durch ein Verfahren gemäß Anspruch 40 gelöst. Vorteilhafte Weiterbildungen sind Gegenstand der Unteransprüche.

Im Rahmen der vorliegenden Erfindung bezieht sich der Begriff gewünschte "optische Daten" auf die ggf. stark individualisierten optischen Daten der für den jeweiligen Patienten bestimmten Linse, die typischer Weise von einem Optiker ermittelt werden, bzw. auf die optischen Solldaten der zu fertigenden Linse. Insbesondere umfassen die "optischen Daten" bei der vorliegenden Erfindung die sphärische optische Wirkung, beispielsweise in Dioptrien, Angaben zu einem Zylinder zur Korrektur von Astigmatismus (beispielsweise Stärke der Krümmung, insbesondere in Dioptrien und Lage der Zylinderachse beispielsweise in Grad), Angaben zu einem Prisma, insbesondere zur Korrektur von Strabismus (beispielsweise Neigung oder Stärke des Prismas, Lage und Form des Prismas, Prismenachse o. dgl.), Angaben zu einem Nah- und/oder Fernbereich, den Pupillenabstand (Abstand der Augen für die Positionierung der Linsen im Brillengestell), die Fittinghöhe (Höhe von der Unterkante der Linse zum Augenmittelpunkt), die Randform (beispielsweise rund unter Angabe des Durchmessers oder oval unter Angabe von kleiner und großer Ellipsenachse oder eine sonstige Form) und/oder Angaben zur Winkellage der Linse bezüglich der Augen bzw. im Brillengestell (pantoskopischer Winkel, Fassungsscheibenwinkel zur Angabe der Neigung der Linsenebene zur optischen Achse des Auges in der Horizontalen o. dgl.).

Der Begriff "geometrische Daten" der Linse bezeichnet erfindungsgemäß die Daten oder Werte, die geometrische Eigenschaften der Linse beschreiben, wie Durchmesser, Dicke ggf. an verschiedenen Stellen, Radius einer optischen Oberfläche bzw. Flächenseite, Krümmung insbesondere an verschiedenen Stellen, etc. Die "geometrischen Daten" stellen insbesondere die Daten bzw. Werte dar, die die (fertig) bearbeitete Linse oder eine Fläche der Linse aufweisen sollte oder muss, um die gewünschten optischen Daten bzw. Eigenschaften zu erreichen. Die geometrischen Daten können sich beispielsweise nur oder zumindest auf eine gerade zu bearbeitende bzw. zu fertigende Seite, wie die Vorder- oder Rückseite der Linse, aber auch auf beiden Seiten, den Rand und/oder die Dicke bzw. den Dickenverlauf der Linse beziehen. Beispielsweise können die geometrischen Daten einen gewünschten Flächenverlauf bzw. eine gewünschte Flächenform, insbesondere einer zu fertigenden Flachseite, der zu bearbeitenden Linse angeben oder festlegen. Dies kann beispielsweise durch entsprechende Parameter, wie Radius einer Sphäre und/oder eines Torus, durch eine Funktion, eine Näherung, durch Koordinatenwerte, durch CAD-Daten und/oder dazu korrespondierende Werte o. dgl. erfolgen. Die geometrischen Daten können beispielsweise auch eine Dicke, verschiedene Dickenwerte oder einen Dickenverlauf der zu fertigenden Linse umfassen. Die geometrischen Daten können auch einen Randverlauf, insbesondere in der Linsenebene entlang des Rands, und/oder eine Randform, beispielsweise die Ausbildung einer Fase oder mehrerer Fasen entlang des Rands, und/oder die Ausbildung einer Nut (Lage, Form) entlang der Randkante o. dgl. umfassen. Bei den geometrischen Daten handelt es sich insbesondere um Daten der zu fertigenden Linse, also um Solldaten bzw. Sollwerte o. dgl., auch wenn teilweise nur eine Näherung und keine vollständige mathematische Beschreibung oder funktionelle Darstellung möglich ist.

Insbesondere betreffen die geometrischen Daten also zumindest eine für die optische Funktion insbesondere als Brillenglas wesentliche und/oder zur Erreichung der gewünschten optischen Dasten wesentliche Fläche oder Flachseite, besonders bevorzugt die Vorder- und/oder Rückseite, der Linse bzw. die fertige Linse. Die vorliegende Erfindung befasst sich insbesondere mit der Herstellung von Linsen mit Freiformflächen, wobei sich "Freiformflächen" im Sinne der vorliegenden Erfindung insbesondere dadurch auszeichnen, dass keine geschlossene mathematische Darstellung oder nur eine näherungsweise mathematische Darstellung, beispielsweise durch bikubische oder höhere Splines o. dgl., möglich ist. Besonders bevorzugt handelt es sich bei der zu fertigenden bzw. zu bearbeitenden Vorder- und/oder Rückseite um eine solche Freiformfläche.

Der Begriff "Fertigungsdaten" bezieht sich erfindungsgemäß insbesondere auf die Daten, mit denen vorzugsweise eine konkrete Bearbeitungseinrichtung angesteuert wird, um einen bestimmten Bearbeitungsvorgang auszuführen. Es sind dies insbesondere Daten, die die Bewegung entsprechender Bearbeitungswerkzeuge und/oder entsprechende Bearbeitungsvorgänge steuern. Beispielsweise kann es sich bei den Fertigungsdaten um sogenannte CNC-Daten o. dgl. handeln. Alternativ oder zusätzlich können die Fertigungsdaten beispielsweise auch geometrische Daten von Zwischenschritten bei der Bearbeitung oder unterschiedlichen Bearbeitungsvorgängen darstellen oder umfassen bzw. enthalten und/oder die geometrischen Daten ggf. ganz ersetzen.

Weiter können die geometrischen Daten und/oder Fertigungsdaten auch ein gewisses Übermaß oder gegebenenfalls Untermaß - insbesondere im Hinblick auf nachfolgende Bearbeitungsschritte, wie Schleifen, Polieren oder Beschichten - enthalten oder berücksichtigen.

Unter "Designmodell" ist erfindungsgemäß insbesondere das zu verstehen, was in der Fachwelt "lens design" genannt wird. Das Designmodell kann spezifisch für einen Lieferanten der Linsenrohlinge sein. Insbesondere umfasst es die Gesamtheit der Algorithmen oder wesentliche Algorithmen, mit denen aus den gewünschten optischen Daten die geometrischen Daten der speziellen Linse ermittelt bzw. bestimmt oder approximiert werden. Die geometrischen Daten hängen insbesondere von dem Linsenmaterial, Brechungsindex, Größe, Form, Dicke, Linsentyp, Hersteller und/oder Art der Verblockung oder dergleichen (diese oder ähnliche, sich insbesondere auf den Linsenrohling bzw. die Linse im Ausgangszustand bzw. vor der Bearbeitung beziehende Angaben und/oder eine eindeutige Identifikation werden vorzugsweise als "Ausgangsdaten" erfindungsgemäß bezeichnet, die insbesondere linsenspezifisch sind) und/oder ggf. von evtl. Approximationen des Designmodells ab. Auf dem Weg vom Linsenrohling zur fertigen Linse können ggf. auch verschiedene Wege eingeschlagen werden. Der vom jeweiligen Hersteller des Linsenrohlings und/oder der Bearbeitungsmaschine konkret gewählte Bearbeitungsweg ist insbesondere im Designmodell und/oder bei der Erzeugung der Fertigungsdaten elektronisch umsetzbar bzw. berücksichtigt.

Das "Designmodell" kann erfindungsgemäß auch als Synonym für einen Algorithmus bzw. Regelsatz zur Bestimmung bzw. Erzeugung - insbesondere durch Berechnen oder Approximieren einer zu bearbeitenden Vorder- oder Rückseite der Linse - der geometrischen Daten bzw. Fertigungsdaten, besonders bevorzugt zur Herstellung oder Bearbeitung einer Vorder- und/oder Rückseite der zu fertigenden Linse, in Abhängigkeit von den gewünschten optischen Daten und insbesondere in Abhängigkeit von Ausgangsdaten, die insbesondere zumindest die Form einer bereits fertigen Rück- oder Vorderseite einer zu bearbeitenden Linse beinhalten, verstanden werden.

Unter "Bearbeitungseinrichtung" wird im Rahmen der vorliegenden Erfindung generell jede Einrichtung verstanden, die eine Bearbeitung der Linse leistet bzw. gestattet. Insoweit umfasst der Begriff "Bearbeitungseinrichtung" auch eine Poliereinrichtung, eine Reinigungseinrichtung und/oder eine Graviereinrichtung. Im Speziellen gibt es aber auch die Begrifflichkeit "Bearbeitungseinrichtung zum spanenden oder sonstigen formgebenden Bearbeiten der Linse". Hierbei handelt es sich insbesondere um die oben angegebenen speziellen Bearbeitungseinrichtungen mit einem Fräswerkzeug, mit einem Drehwerkzeug oder mit einem anderen formgebenden Bearbeitungswerkzeug.

Ein erster Aspekt der vorliegenden Erfindung liegt in einer Vorrichtung zum Bearbeiten einer optischen Linse gemäß Anspruch 1.

Ein zweiter Aspekt der vorliegenden Erfindung liegt in einem Verfahren zum Bearbeiten einer optischen Linse gemäß Anspruch 12.

Die Erfassungseinrichtung ist in die Vorrichtung integriert.

Das Erfassen des Freischaltcodes und/oder der Ausgangsdaten erfolgt insbesondere optisch, magnetisch und/oder elektromagnetisch, beispielsweise durch Erfassen eines Barcodes und/oder Kommunizieren mit einem Informationsträger, wie einem RFID-Chip oder -Transponder. Dies gestattet eine sehr einfache Realisierung.

Der nachfolgend teilweise verwendete Begriff "Informationen" umfasst erfindungsgemäß vorzugsweise einen Freischaltcode im genannten Sinne und/oder Ausgangsdaten und/oder sonstige für die Bearbeitung relevante Daten für die jeweilige Linse oder für eine Gruppe von, insbesondere gleichartigen oder identischen Linsen. Diese Informationen oder Teile davon sind vorzugsweise in einem Informationsträger gespeichert oder enthalten. Bei dem Informationsträger kann es sich insbesondere um einen sogenannten RFID-Transponder (Chip oder Einrichtung zur Identifizierung mit Hilfe elektromagnetischer Wellen, abgeleitet aus dem englischen Begriff "Radio-Frequency-Identification"), oder um eine optische Kennzeichnung, wie einen Barcode, insbesondere einen 2D-Barcode (zweidimensionalen Barcode) handeln oder enthalten.

Vorzugsweise weist die Vorrichtung zum Bearbeiten einer optischen Linse nicht nur eine Bearbeitungseinrichtung zum spanenden oder sonstigen formgebenden Bearbeiten der Linse und ggf. eine Poliereinrichtung zum Polieren der Linse, sondern auch eine Eingabeeinrichtung für die gewünschten optischen Daten der Linse auf. Die Steuereinrichtung der Vorrichtung ist zum Erzeugen von Linsen-Fertigungsdaten aus den eingegebenen gewünschten optischen Daten und/oder zum Bestimmen von geometrischen Daten der Linse aus den gewünschten optischen Daten ausgebildet.

So kann auf einfache Weise und mit geringem Aufwand, insbesondere auch durch wenig geschultes Personal und/oder vor Ort und/oder ohne Verbindung zu einem Host-Rechner und/oder ohne Bestellung eines Rohglases, eine (sofortige) Bearbeitung der Linse bzw. einer direkt verfügbaren Linse derart erfolgen, dass die fertige Linse die gewünschten optischen Daten und damit die gewünschten optischen Eigenschaften aufweist. Die vom Optiker ermittelten gewünschten optischen Daten der zu erzeugenden Linse können auf einfache Weise vorgelegt werden. Eine Bedienungsperson braucht nur diese Daten und gegebenenfalls Ausgangsdaten der zu bearbeitenden Linse bzw. des Linsenrohlings einzugeben, um die Linse mit den gewünschten optischen Eigenschaften herzustellen. Die weiteren Datensätze, die den gewünschten optischen Daten nachgeordnet sind, werden von der Vorrichtung selbst erzeugt.

Die Eingabeeinrichtung weist vorzugsweise ein Bedienfeld zur manuellen Eingabe der gewünschten optischen Daten auf. Dies gestattet eine sehr einfache Eingabe und lässt sich mit geringem Aufwand realisieren. Ein Bedienfeld zur manuellen Eingabe der gewünschten optischen Daten ist insbesondere eine Tastatur oder ein Touch-Screen.

Die Eingabeeinrichtung kann alternativ oder zusätzlich zur Eingabe der Informationen, insbesondere des Freischaltcodes, verwendet werden.

Die Eingabeeinrichtung kann alternativ oder zusätzlich auch eine Schnittstelle für eine elektronische Eingabe oder Aufnahme der gewünschten optischen Daten aufweisen, insbesondere direkt von einem Messgerät, Computer o. dgl.

Vorzugsweise weist die Eingabeeinrichtung bzw. Vorrichtung, insbesondere für eine Menüführung des Benutzers, auch eine Anzeigeeinrichtung, insbesondere in Form eines Dialogfeldes bzw. eines Bildschirms, möglicherweise ausgestattet als Touch-Screen, auf. Mittels der Menüführung kann ein Benutzer die Vorrichtung über das Bedienfeld auf einfache Weise insbesondere ohne besondere Schulung bedienen.

Die Vorrichtung bzw. Steuereinrichtung weist vorzugsweise ein Designmodul mit einem Designmodell zum Bestimmen von geometrischen Daten der Linse aus den gewünschten optischen Daten in einem Bestimmungsvorgang auf. Dies stellt eine wesentliche Vereinfachung gegenüber dem Stand der Technik dar. Insbesondere ist eine Integration des Designmoduls bzw. Designmodells (lens design) in eine Maschinensteuerung einer Bearbeitungseinrichtung vorgesehen. Dies vereinfacht den Aufbau und verringert den Aufwand außerordentlich.

Unter "Designmodul" ist insbesondere eine Datenverarbeitungseinrichtung, Berechnungseinrichtung oder Berechnungseinheit zu verstehen, die besonders bevorzugt durch einen separaten Rechner und/oder durch Software bzw. ein Berechnungsprogramm oder dgl. gebildet oder realisiert werden kann.

Das Designmodul dient der Bestimmung der geometrischen Daten der Linse und/oder der Erzeugung von Fertigungsdaten. Hierbei benutzt das Designmodul mindestens ein Designmodell im bereits genannten Sinne. Das Designmodell kann wahlweise fest vorgegeben, einprogrammiert und/oder änderbar sein. Bei Bedarf können auch mehrere oder unterschiedliche Designmodelle zum Einsatz kommen.

Besonders bevorzugt ist das Designmodell vorgebbar, eingebbar und/oder änderbar. Dies gestattet einen universellen Einsatz und/oder eine Anpassung an jeweilige Gegebenheiten bzw. verschiedene Linsen, Linsenhersteller und/oder Kundenwünsche.

Gemäß einer Variante ist das Designmodell zum Bestimmen von geometrischen Daten der Linse aus den gewünschten optischen Daten aus mehreren Designmodellen - insbesondere selbsttätig in Abhängigkei von der Linse oder von dem Linsentyp bzw. -rohling - auswählbar. Dies gestattet eine optimale Anpassung oder Auswahl.

Unter "Bestimmungsvorgang" ist vorzugsweise das Bestimmen der geometrischen Daten bzw. Erzeugen der Fertigungsdaten für eine zu bearbeitende Linse zu verstehen. Hierbei können auch mehrere Bestimmungs- oder Erzeugungsschritte durchgeführt werden oder auftreten. Diese werden insgesamt als ein einziger Bestimmungsvorgang definiert, gewertet, gezählt bzw. erfasst, sofern sich diese alle auf die selbe Linse beziehen.

Die Vorrichtung bzw. Steuereinrichtung weist vorzugsweise ein Fertigungsmodul zum Erzeugen von Fertigungsdaten zumindest für eine Bearbeitungseinrichtung der Vorrichtung und, so vorhanden, für die Poliereinrichtung aus den zuvor bestimmten geometrischen Daten der Linse auf. So kann bei geringem Aufwand eine unmittelbare Weiterverarbeitung der bestimmten geometrischen Daten erfolgen. Insbesondere können Übertragungsprobleme vermieden werden. Weiter vereinfacht dies die Bedienung und Handhabung.

Unter "Fertigungsmodul" ist insbesondere eine Datenverarbeitungseinrichtung, Berechnungseinrichtung oder Berechnungseinheit zu verstehen, die besonders bevorzugt durch einen separaten Rechner und/oder durch Software bzw. ein Berechnungsprogramm oder dgl. gebildet oder realisiert werden kann.

Wie bereits oben erwähnt, kann das Fertigungsmodul entfallen bzw. in das Designmodul integriert sein, wenn das Designmodul direkt oder auch die (erforderlichen) Fertigungsdaten erzeugt. Alternativ oder zusätzlich kann jedoch auch mindestens ein Fertigungsmodul zur Erzeugung von Fertigungsdaten vorgesehen sein.

Ein "Freischaltcode" im Sinne der vorliegenden Erfindung ist vorzugsweise ein Code, der zur Freischaltung bzw. Freigabe für die Bearbeitung bzw. für die Bestimmung von geometrischen Daten und/oder Fertigungsdaten der Linse aus den gewünschten optischen Daten bzw. zur Benutzung des Designmoduls oder eines Designmodells und/oder des Fertigungsmoduls erforderlich ist. Grundsätzlich ist es auch möglich, dass der Freischaltcode generell zur Benutzung der Vorrichtung bzw. zum Bearbeiten einer optischen Linse, auch unabhängig von der Benutzung eines Designmoduls oder Designmodells und/oder Fertigungsmoduls erforderlich ist.

Bei dem Freischaltcode handelt es sich um eine mehrstellige alphanumerische Zeichenfolge.

Nach Erfassung eines Freischaltcodes wird - in der Vorrichtung bzw. Steuereinrichtung - überprüft, ob es sich um einen zulässigen Freischaltcode handelt. Dies erfolgt insbesondere durch Vergleichen eines angegebenen oder erfassten Freischaltcodes mit zulässigen Freischaltcodes, die vorzugsweise in der Vorrichtung gespeichert oder in sonstiger Weise vorhanden oder erzeugbar sind. Nur wenn der eingegebene bzw. erfasste Freischaltcode mit einem der zulässigen Freischaltcodes übereinstimmt, wird ein Bestimmen von geometrischen Daten bzw. Fertigungsdaten aus den gewünschten optischen Daten bzw. ein Bestimmungsvorgang für eine Linse gestattet. Danach wird der zulässige Freischaltcode vorzugsweise als unzulässig markiert oder gelöscht, insbesondere um eine nochmalige Verwendung des Freischaltcodes zu vermeiden. Jedoch kann es grundsätzlich auch möglich sein, dass ein zulässiger Freischaltcode für mehrere Bestimmungsvorgänge, beispielsweise für zwei oder mehr Bestimmungsvorgänge benutzt werden kann und dementsprechend eine Mehrfachnutzung zulässig ist.

Die Überprüfung des Freischaltcodes erfolgt besonders bevorzugt in der Steuereinrichtung bzw. mittels eines Vergleichers oder Vergleichsmittels oder auf sonstige geeignete Art und Weise, besonders bevorzugt in der Vorrichtung.

Nach der Bestimmung der geometrischen Daten bzw. Fertigungsdaten kann die eigentliche formgebende bzw. spanende Bearbeitung der Linse, insbesondere einer Vorder- und/oder Rückseite der Linse, erfolgen, insbesondere um bei der Linse die gewünschten optischen Daten - also die gewünschten optischen Werte oder Eigenschaften für einen späteren Benutzer - zu erreichen.

Die Vorrichtung ist besonders bevorzugt als kompaktes Bearbeitungszentrum ausgebildet. Vom Grundsatz her zeigt bereits die DE 10 2007 007 188 A1 eine Vorrichtung in Form eines Bearbeitungszentrums. Dort ist allerdings nichts zur Steuereinrichtung und zur Eingabeeinrichtung erläutert.

Insbesondere weist die vorschlagsgemäße Vorrichtung ein gemeinsames Gehäuse für mindestens eine Bearbeitungseinrichtung der Vorrichtung sowie für sonstige optionale Einrichtungen zum Polieren, Reinigen, Markieren und/oder Blocken auf. Dies gestattet einen besonders kompakten und/oder kostengünstigen Aufbau und/oder eine Vereinfachung des Aufwands, der Steuerung und/oder der Bedienung. Weiter können so ansonsten erforderliche externe Schnittstellen zur Übertragung von Daten bzw. Weitergabe von Informationen minimiert oder ganz vermieden werden.

Besonders bevorzugt ist die Steuereinrichtung, das Designmodul, die Eingabeeinrichtung und/oder die Erfassungseinrichtung in die Vorrichtung integriert oder fest mit dieser verbunden. Das entspricht dem bevorzugten Gestaltungsprinzip des vorschlagsgemäßen kompakten Bearbeitungszentrums. Jedoch kann die Steuereinrichtung und/oder Eingabeeinrichtung gemäß einer Ausführungsvariante auch als separate, insbesondere unmittelbar mit der Vorrichtung verbindbare Komponente oder Baueinheit ausgeführt sein, die dann vorzugsweise aber dezidiert für die Vorrichtung ausgebildet und mit dieser sehr einfach, insbesondere ausschließlich verbindbar ist.

Von besonderem Vorteil ist eine Ausgestaltung der Vorrichtung, bei der die Linse bzw. der Linsenrohling, insbesondere aufgeblockt auf einem Blockstück, manuell in die Bearbeitungseinrichtung und, so vorhanden, in die Poliereinrichtung einsetzbar bzw. einspannbar und aus dieser wieder entnehmbar ist. Entsprechendes gilt hier insbesondere auch für die Reinigungseinrichtung. Dies entspricht einer einfachen, am Anwendungsort der Vorrichtung gut handhabbaren Konstruktion. Dadurch werden die Kosten der Vorrichtung deutlich gesenkt, da kostenträchtige, komplizierte Manipulationseinrichtungen für die Linse bzw. den Linsenrohling, vorzugsweise auf dem Blockstück, entfallen können.

Besonders bevorzugt sind Informationen oder ein Teil der Informationen bzw. ein damit versehener Informationsträger der Linse oder einer Schutzfolie, mit der die Linse versehen ist, oder einem Blockstück, das die Linse trägt, zugeordnet. Besonders bevorzugt werden die Informationen bzw. der Informationsträger von der Schutzfolie getragen bzw. sind davon unlösbar. Alternativ oder zusätzlich kann ein Transportbehältnis mit den Informationen oder einem Teil der Informationen bzw. dem die Informationen enthaltenen Informationsträger versehen sein.

Ein bevorzugtes Verfahren zum Bearbeiten einer optischen Linse zeichnet sich dadurch aus, dass eine zu bearbeitende Linse, insbesondere also ein Linsenrohling, einer Vorrichtung zugeführt wird und gewünschte optische Daten der Linse in die Vorrichtung eingegeben werden, wobei ein Freischaltcode erfasst wird und nur bei einem zulässigen Freischaltcode geometrische Daten der Linse aus den gewünschten optischen Daten bestimmt und daraus Fertigungsdaten erzeugt oder direkt Fertigungsdaten erzeugt werden und die Linse in Abhängigkeit von den erzeugten Fertigungsdaten von der Vorrichtung bearbeitet wird. Besonders bevorzugt ist eine externe Beeinflussung oder Störung der Bestimmung der geometrischen Daten, der Erzeugung der Fertigungsdaten, der Datenverarbeitung und/oder der Datenweiterleitung an die Bearbeitungseinrichtung(en) nach der Eingabe der optischen Daten und/oder gegebenenfalls nach einem Starten bzw. einer optionalen anfänglichen Freigabe nicht mehr möglich. Dies gestattet bei geringem Aufwand eine Bearbeitung von Linsen vor Ort, wobei die Bedienung wesentlich vereinfacht und insbesondere auf die unmittelbare Eingabe der gewünschten optischen Daten und gegebenenfalls Informationen reduziert werden kann.

Vorzugsweise erfolgt eine spanende, insbesondere drehende Bearbeitung einer Vorder- und/oder Rückseite der Linse und anschließend ein Polieren der bearbeiteten Linse in der Vorrichtung.

Besonders bevorzugt weist die zu bearbeitende Linse bereits eine fertige bzw. bearbeitete oder geformte Seite, insbesondere Rückseite, auf. Die andere Seite der Linse wird in der Bearbeitungseinrichtung formgebend, insbesondere spanend, bearbeitet, wobei aus den gewünschten optischen Daten der Linse und in Abhängigkeit von der Form der bereits fertigen Seite der Linse die geometrischen Daten und/oder Fertigungsdaten der zu bearbeitenden Seite der Linse bestimmt und für die Bearbeitung verwendet werden.

Vorzugsweise werden vorschlagsgemäß (nur) direkt verfügbare bzw. vorhandene Linsen bearbeitet, so dass eine im Stand der Technik übliche Fernübertragung von Linsendaten und Linsenbestellung bei einem Glashersteller entfallen (können).

Weitere Aspekte, Merkmale, Vorteile und Eigenschaften der vorliegenden Erfindung ergeben sich aus den Ansprüchen und der nachfolgenden Beschreibung eines bevorzugten Ausführungsbeispiels anhand der Zeichnung. Es zeigt:
- Fig. 1: einen schematischen Aufbau einer vorschlagsgemäßen Vorrichtung;
- Fig. 2: eine schematische Ansicht der Vorrichtung;
- Fig. 3: eine schematische Ansicht einer Erfassungseinrichtung der Vorrichtung und einer zu bearbeitenden Linse auf einem Blockstück;
- Fig. 4: eine schematische Draufsicht der Linse mit einer Schutzfolie und einem Informationsträger; und
- Fig. 5: eine schematische, schnittartige Ansicht eines Transportbehältnisses für eine oder mehrere Linsen mit einem Informationsträger für die Vorrichtung.

In den Figuren werden für gleiche oder gleichartige Komponenten und Einrichtungen die gleichen Bezugszeichen verwendet, wobei sich die gleichen oder entsprechenden Vorteile und Eigenschaften ergeben, auch wenn eine Wiederholte Beschreibung weggelassen ist.

Gegenstand der Erfindung ist eine Vorrichtung 1 zum Bearbeiten einer optischen Linse 2. Für den technologischen Hintergrund einer solchen Vorrichtung darf zunächst auf die Beschreibungseinleitung verwiesen werden.

Ausgangspunkt für die Entstehung bzw. Bearbeitung einer optischen Linse 2 ist ein Linsenrohling. Dieser wird spannend oder in einer sonstigen formgebenden Bearbeitung und ggf. in weiteren Bearbeitungsschritten so bearbeitet, dass am Ende eine fertige optische Linse 2 mit den gewünschten optischen Eigenschaften steht. Der Begriff "Linse" bezeichnet im Rahmen der vorliegenden Beschreibung vorzugsweise sowohl den Linsenrohling vor Durchführung der notwendigen Bearbeitungsschritte, als auch am Ende die fertige Linse 2.

Die Linse 2 bzw. der Linsenrohling besteht vorzugsweise aus Kunststoff. Jedoch kann grundsätzlich auch ein sonstiger in geeigneter Weise zu bearbeitender Werkstoff, ggf. auch Glas bzw. Mineralglas, verwendet werden. Wenn die fertige Linse 2 für eine Brille (nicht dargestellt) eingesetzt bzw. verwendet werden soll, was vorzugsweise der Fall ist, wird die Linse 2 bei der vorliegenden Erfindung auch als Brillenglas bezeichnet, selbst wenn die Linse 2 gegebenenfalls nicht aus Glas besteht.

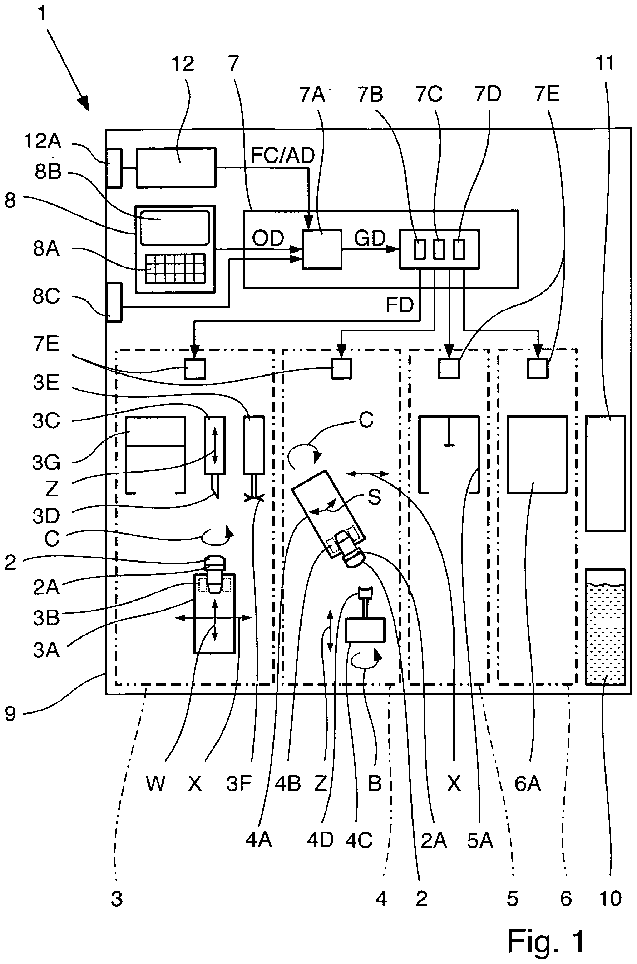

Die erfindungsgemäße Vorrichtung 1 weist mindestens oder ausschließlich eine Bearbeitungseinrichtung 3 zum spanenden oder sonstigen formgebenden Bearbeiten der Linse 2 als zu bearbeitendes Werkstück auf. Diese Bearbeitungseinrichtung 3 ist in Fig. 1 nur schematisch angedeutet.

Im dargestellten und bevorzugten Ausführungsbeispiel weist die Bearbeitungseinrichtung 3 vorzugsweise eine Werkstückspindel 3A auf, die vorzugsweise in eine W-Richtung und X-Richtung verfahrbar ist, insbesondere mittels eines Kreuzschlittens, der nur angedeutet ist. Die beiden Richtungen W, X verlaufen vorzugsweise quer oder senkrecht zueinander.

Bei der Werkstückspindel 3A handelt es sich insbesondere um eine vorzugsweise direkt angetriebene, präzise gelagerte Welle bzw. einen Direktantrieb oder einen sonstigen Antrieb jeweils mit vorzugsweise integrierter oder zugeordneter Schnittstelle oder Aufnahme 3B für das Werkstück, hier also für die Linse 2 bzw. den Linsenrohling. Grundsätzlich kann eine direkte Aufnahme bzw. Einspannung der Linse 2 erfolgen. Vorzugsweise wird die Linse 2 bzw. der Linsenrohling jedoch mittelbar über einen Halter, insbesondere ein sogenanntes Blockstück 2A, gehalten. Das Blockstück 2A wird dann eingespannt.

Die Linse 2 ist temporär mit dem Blockstück 2A verbunden. Dieser mit dem Blockstück 2A verbundene Zustand wird als "geblockt" oder "aufgeblockt" bezeichnet. Das Blocken, also temporäre Befestigen, der Linse 2 am Blockstück 2A kann beispielsweise durch eine vorzugsweise bei niedriger Temperatur schmelzende Legierung, wie sogenanntes Alloy-Blockmaterial, ein Harz, einen Klebstoff, einen Kunststoff, einen Klebestreifen o. dgl. erfolgen und ist aus dem Stand der Technik hinlänglich bekannt.

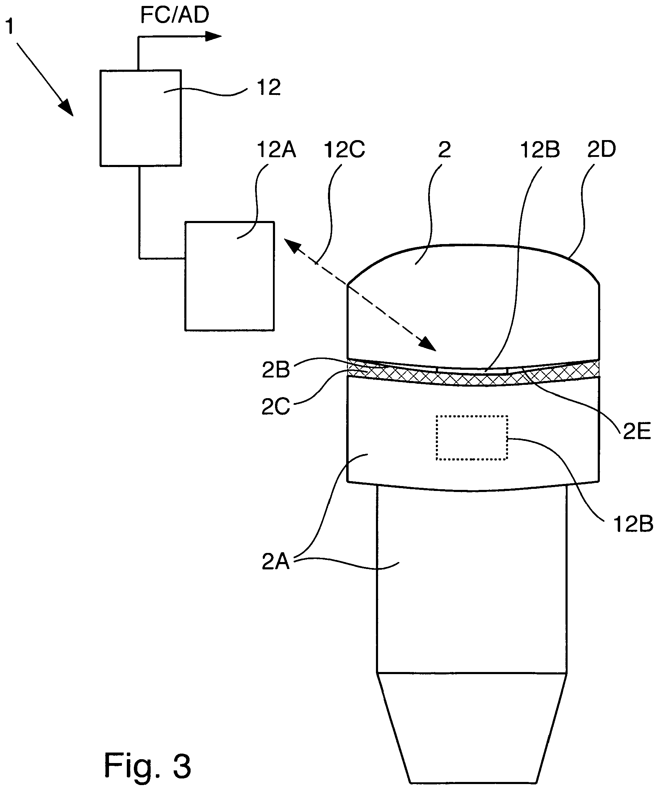

Fig. 3 zeigt in einer schematischen vergrößerten Ansicht die Linse 2 mit einem zugeordneten Blockstück 2A gemäß einem möglichen Ausführungsbeispiel. Die Linse 2 ist hier also geblockt.

Die zu bearbeitende Linse 2 weist mindestens eine - vorzugsweise vollständig - zu bearbeitende optische Fläche bzw. Flachseite, hier insbesondere eine Vorderseite 2D, auf. Die andere optische Fläche bzw. Flachseite, hier die Rückseite 2E, ist beim Darstellungsbeispiel dem Blockstück 2A zugewandt.

Die der zu bearbeitenden gegenüberliegenden Seite der Linse 2, hier die Rückseite 2E, ist vorzugsweise bereits fertig bzw. bereits bearbeitet oder geformt. Insbesondere bedarf diese Seite keiner weiteren formgebenden Bearbeitung, stattdessen erfolgt dann zur Erzielung der gewünschten optischen Daten bzw. Eigenschaften der Linse 2 vorzugsweise nur eine formgebende Bearbeitung der anderen Seite bzw. Vorderseite 2D der Linse 2. Dies wird nachfolgend näher erläutert.

Die Werkstückspindel 3A weist beim Darstellungsbeispiel, wie in Fig. 1 gezeigt, vorzugsweise die Aufnahme 3B, insbesondere eine Spannzange, für das Blockstück 2A auf.

Das Einspannen der Linse 2 bzw. des Blockstücks 2A an der Werkstückspindel 3A bzw. Aufnahme 3B erfolgt vorzugsweise von Hand, also manuell durch einen nicht dargestellten Bediener. Jedoch ist grundsätzlich auch ein automatisiertes Einspannen möglich.

Die Linse 2 bzw. das Blockstück 2A ist bzw. sind vorzugsweise in einer bestimmten axialen Lage und/oder Drehlage einspannbar, um die Linse 2 definiert bearbeiten zu können. Hierzu kann das Blockstück 2A auch mehrteilig aufgebaut sein, wie insbesondere aus dem Stand der Technik bekannt.

Mittels der Werkstückspindel 3A ist die eingespannte Linse 2 zur Bearbeitung in Drehung bzw. Rotation versetzbar. Die Werkstückspindel 3A bildet also insbesondere einen Drehantrieb für die Linse 2. Die Werkstückspindel 3A bildet insbesondere eine gerechnete oder gesteuerte Rundachse C. Insbesondere erfolgt eine CNC-Steuerung der Werkstückspindel 3A bzw. der Rotation der Linse 2. Besonders bevorzugt ist die Linse 2 gesteuert oder geregelt mit einer bestimmten Drehzahl und/oder mit einer definierten Drehlage in Drehung bzw. Rotation versetzbar.

Im dargestellten Ausführungsbeispiel ist die Werkstückspindel 3A mit dem eingespannten bzw. aufgeblockten Linsenrohling 2 vorzugsweise in W-Richtung zu einem Bearbeitungswerkzeug zustellbar bzw. positionierbar und/oder in X-Richtung quer zur Zustellrichtung (Quervorschub) bewegbar bzw. verfahrbar. Insbesondere werden eine gesteuerte W-Achse und X-Achse bzw. Linearachsen gebildet. Grundsätzlich sind auch andere oder zusätzliche Richtungen und/oder Bewegungsachsen möglich. Insbesondere kann die axiale Ausrichtung der Dreh- bzw. Rundachse C der Werkstückspindel 3A auch schräg zur W-Richtung oder zur X-Richtung verlaufen.

Die Bearbeitungseinrichtung 3 ist vorzugsweise zum Bearbeiten der Linse 2 durch Drehen, insbesondere Stirndrehen, und/oder Fräsen ausgebildet. Jedoch kann die Bearbeitungseinrichtung 3 alternativ oder zusätzlich auch ein sonstiges, insbesondere spannendes oder formgebendes Bearbeiten der Linse 2 ermöglichen.

Beim Darstellungsbeispiel weist die Bearbeitungsvorrichtung 1 vorzugsweise einen Antrieb 3C mit einem Drehwerkzeug 3D und/oder einen Fräsantrieb 3E mit einem Fräswerkzeug 3F auf. Hier ist als Bearbeitungswerkzeug insbesondere also das Drehwerkzeug 3D bzw. Fräswerkzeug 3F vorgesehen.

Die Linse 2 und das jeweilige Bearbeitungswerkzeug (hier Drehwerkzeug 3D bzw. Fräswerkzeug 3F) sind vorzugsweise relativ zueinander zustellbar und/oder bewegbar, um die jeweilige Bearbeitung zu ermöglichen.

Vorzugsweise handelt es sich bei dem Antrieb 3C um einen komplexen, vorzugsweise elektrisch arbeitenden Achsantrieb, wie einen Tauchspulenantrieb, o. dgl., insbesondere um einen sogenannten Fast-Tool-Antrieb, um das Drehwerkzeug 3D insbesondere in Abhängigkeit von der Drehlage der Linse 2 und/oder in Abhängigkeit des Abstands des Drehwerkzeugs 3D von der Drehachse der Werkstücksspindel 3A in seiner Axiallage bzw. Z-Achse zu steuern bzw. schnell vor- und zurückzubewegen. Der Antrieb 3C gestattet eine vorzugsweise lineare und/oder gesteuerte bzw. geregelte Bewegung des Drehwerkzeugs 3D und bildet daher vorzugsweise eine gesteuerte Z-Achse.

Die Richtung der Z-Achse einerseits und die Richtung der W-Achse bzw. die axiale Ausrichtung der Dreh- bzw. Rundachse C andererseits können parallel zueinander oder geneigt zueinander verlaufen und/oder zueinander einstellbar sein. Bei einer relativen Neigung ist diese vorzugsweise derart gering, dass das bevorzugte Stirndrehen zur Bearbeitung des Werkstücks bzw. der Linse 2 in gewünschter bzw. erforderlicher Weise noch erfolgen kann.

Der Begriff "Achse" wird bei der vorliegenden Erfindung besonders bevorzugt im Sinne der Terminologie bei CNC-Steuerungen (numerischen bzw. rechnergestützten Steuerungen) als eine gesteuerte oder geregelte bzw. gerechnete Bewegungsachse, wie eine Linearachse oder Rundachse, verstanden. Dies gilt insbesondere für einzelne oder alle Teile einer Bearbeitungseinrichtung und/oder mehrere Bearbeitungseinrichtungen bzw. für die vorschlagsgemäße Vorrichtung 1 insgesamt.

Das Fräswerkzeug 3F und der zugeordnete Fräsantrieb 3E sind in Fig. 1 nur schematisch angedeutet. Die Ausrichtung der Rotations- bzw. Drehachse des Fräswerkzeugs 3F verläuft vorzugsweise quer oder senkrecht zur axialen Richtung der Dreh- bzw. Rundachse C der Werkstückspindel 3A. Das Fräswerkzeug 3F kann je nach Bedarf und Ausführung mit seiner Ausrichtung der Drehachse auch schräg geneigt zur axialen Richtung der Dreh- bzw. Rundachse C der Werkstückspindel 3A ausgerichtet oder schwenkbar sein und/oder relativ zur Linse 2, beispielsweise durch entsprechendes Bewegen der Werkstückspindel 3A und/oder des Fräsantriebs 3E bzw. Fräswerkzeugs 3F, zugestellt werden.

Im dargestellten und bevorzugten Ausführungsbeispiel erfolgt die Bearbeitung 3 vorzugsweise zweistufig, insbesondere ausgeführt mit einem gröber arbeitenden Fräswerkzeug 3F zur gröberen Bearbeitung (Vorbearbeitung) und einem feiner arbeitenden Drehwerkzeug 3D zur feineren Bearbeitung (Feinbearbeitung bzw. Hauptbearbeitung). Bei Bedarf kann die Bearbeitung durch Fräsen jedoch auch ganz entfallen. Dies führt zu einer Vereinfachung der Vorrichtung 1 bzw. Bearbeitungseinrichtung 3 und gestattet einen kompakteren und/oder kostengünstigeren Aufbau. Bedarfsweise kann auch das Drehen in zwei Schritten, wie einem gröberen Vordrehen und späterem Feindrehen, vorzugsweise mit dem selben Drehwerkzeug 3D gegebenenfalls aber auch mit unterschiedlichen Drehwerkzeugen, erfolgen.

Insbesondere kann beispielsweise in der Bearbeitungseinrichtung 3 eine Bearbeitung erfolgen bzw. ein Aufbau vorgesehen sein, wie in der EP 0 849 038 A2 oder DE 10 2009 011 194 A2 beispielsweise beschrieben.

Die spanende bzw. formgebende Bearbeitung erfolgt vorzugsweise unter Zugabe von Flüssigkeit, wie einer Kühlemulsion o. dgl.

Vorzugsweise weist die Vorrichtung 1, hier insbesondere die Bearbeitungseinrichtung 3, auch eine Markiereinrichtung 3G, beispielsweise einen Laser, auf, um die Linse 2 beispielsweise mit entsprechenden Daten, Markierungen o. dgl., zu markieren. Die Markiereinrichtung 3G ist vorzugsweise wie in der EP 1 955 811 A1 dargestellt, aufgebaut und/oder ausgebildet.

Bedarfsweise erfolgt in der Bearbeitungseinrichtung 3 auch eine (erste) Randbearbeitung der Linse 2. Jedoch kann für die Randbearbeitung alternativ oder zusätzlich auch eine zusätzliche, nicht dargestellte Bearbeitungseinrichtung, wie ein sogenannter Edger o. dgl., vorgesehen sein.

Es ist auch möglich, dass die Vorrichtung 1 bzw. Bearbeitungseinrichtung 3 derart ausgebildet ist, dass die Linse 2 nach der eigentlichen formgebenden Bearbeitung - der optischen Fläche(n) bzw. Flachseite(n) der Linse 2, besonders bevorzugt der Vorderseite 2D - und nach einem Beschichten erneut spanend bzw. formgebend bearbeitet werden kann, insbesondere zur Randbearbeitung der Linse 2 bzw. Fertigbearbeitung des Rands der Linse 2.

Die Vorrichtung 1 weist zusätzlich zur Bearbeitungseinrichtung 3 vorzugsweise eine Poliereinrichtung 4 zum Polieren bzw. Endbearbeiten der zuvor in der Bearbeitungseinrichtung 3 bearbeiteten Linse 2 bzw. dieses Linsenrohlings auf. Die Poliereinrichtung 4 ist im in Fig. 1 dargestellten Ausführungsbeispiel vorzugsweise benachbart zu und/oder seitlich neben der Bearbeitungseinrichtung 3 angeordnet.

Die Poliereinrichtung 4 kann ein gemeinsames Gehäuse mit der Bearbeitungseinrichtung 3 oder ein davon getrenntes Gehäuse aufweisen.

Die Poliereinrichtung 4 ist besonders bevorzugt wie in der DE 10 2007 042 667 A1 beschrieben aufgebaut oder ausgebildet, wobei die Poliereinrichtung 4 gemäß der vorliegenden Erfindung bedarfsweise auch nur zur Bearbeitung einer Linse 2 und nicht zur simultanen Bearbeitung von zwei Linsen 2 ausgebildet sein kann, insbesondere also nur einen Antrieb zum Rotieren der Linse 2 aufweisen kann.

Die Poliereinrichtung 4 weist beim Darstellungsbeispiel vorzugsweise eine Werkstückspindel 4A mit einer Aufnahme 4B auf. Die Werkstückspindel 4A kann grundsätzlich ähnlich oder baugleich wie die Werkstückspindel 3A in der Bearbeitungseinrichtung 3 aufgebaut und/oder in X-Richtung (Quervorschub) verfahrbar und/oder wie durch Pfeil S angedeutet schwenkbar sein. Ergänzend wird daher auf die Beschreibung zur Werkstückspindel 3A verwiesen. Insbesondere dient die Werkstückspindel 4A ebenso als Antrieb, um die Linse 2 in Rotation für die Bearbeitung, hier das Polieren, zu versetzen, und/oder dient der Zustellung der Linse 2 zu einem Polierwerkzeug 4D. Insbesondere handelt es sich bei der Werkstückspindel 4A um einen einfachen Drehantrieb, beispielsweise einen Motor mit einem Riemenantrieb, um die Linse 2 in Rotation für die Bearbeitung bzw. das Polieren zu versetzen. Besonders bevorzugt wird die Linse 2 bzw. das Blockstück 2A ohne definierte Drehlage aufgenommen und/oder lediglich mit einer konstanten (je nach Bedarf gegebenenfalls gesteuerten oder geregelten) Drehzahl rotiert.

Das Polieren kann grundsätzlich auch erst nach dem Abblocken, also nach einem Lösen der Linse 2 vom zugeordneten Blockstück 2A erfolgen. In diesem Fall wird die Linse 2 vorzugsweise direkt eingespannt.

Das Einspannen der Linse 2 bzw. des Blockstücks 2A in die Werkstückspindel 4A bzw. deren Aufnahme 4B erfolgt vorzugsweise wiederum von Hand, also manuell von einem nicht dargestellten Bediener. Dementsprechend erfolgt vorzugsweise auch ein manuelles Umspannen von der Werkstückspindel 3A zur Werkstückspindel 4A. Dieses Umspannen kann, insbesondere ebenso wie das Einspannen an sich, grundsätzlich auch automatisiert bzw. selbsttätig mittels einer entsprechenden (nicht dargestellten) Manipulier- bzw. Spanneinrichtung durch die Vorrichtung 1 erfolgen.

Die separaten Antriebe bzw. Werkstückspindeln 3A und 4A und/oder Aufnahmen 3B und 4B für die Bearbeitungseinrichtung 3 einerseits und die Poliereinrichtung 4 andererseits ermöglichen eine unabhängige Bearbeitung (das Polieren wird auch als Bearbeiten, insbesondere als geometrische bzw. mechanische Endbearbeitung der Fläche, verstanden) in den beiden Einrichtungen 3 und 4, so dass der Durchsatz der Vorrichtung 1 an bearbeiteten Linsen 2 entsprechend höher ist verglichen mit einer gemeinsamen Werkstückspindel für beide Einrichtungen 3 und 4. Jedoch kann grundsätzlich an Stelle der separaten bzw. zusätzlichen Werkstückspindel 4A für die Poliereinrichtung 4 lediglich eine bzw. die Werkstückspindel 3A gemeinsam für beide Einrichtungen 3 und 4 eingesetzt werden. Bedarfsweise kann das Polieren in der Poliereinrichtung 4 auch simultan für mehrere Linsen 2 gleichzeitig und/oder in mehreren Bearbeitungsschritten erfolgen.

Vorzugsweise weist die Poliereinrichtung 4 mindestens einen Polierantrieb 4C mit mindestens einem zugeordneten Polierwerkzeug 4D als Bearbeitungswerkzeug auf. Der Polierantrieb 4C kann das Polierwerkzeug 4D insbesondere in Drehung versetzen, wie durch Pfeil B angedeutet.

Besonders bevorzugt ist das Polierwerkzeug 4D insbesondere mit einer vorbestimmten Kraft gegen die zu bearbeitende Linse 2 bzw. das Werkstück drückbar bzw. anstellbar, hier beim Darstellungsbeispiel in Z-Richtung. Das Andrücken bzw. Anstellen kann beispielsweise pneumatisch, durch Federkraft und/oder auf sonstige geeignete Art und Weise erfolgen.

Zusätzlich oder alternativ kann der Polierantrieb 4C bzw. das Polierwerkzeug 4D bedarfsweise auch in X-Richtung bewegbar bzw. verschiebbar sein, insbesondere also eine gesteuerte X-Achse bilden oder aufweisen, insbesondere zur Relativverstellung (Quervorschub) relativ zum Werkstück bzw. zur Linse 2.

Zusätzlich oder alternativ zu der möglichen Schwenkbewegung S des Werkstückantriebs bzw. des Werkstücks kann sich das Polierwerkzeug 4D vorzugsweise über ein entsprechendes Gelenk, wie ein Kugelgelenk oder Kardangelenk, in seiner Neigung gelenkig an die Oberfläche der zu bearbeitenden Linse 2 anpassen oder anlegen.

Dargestellt ist ein einziger Polierantrieb 4C mit einem einzigen Polierwerkzeug 4D. Selbstverständlich können auch mehrere Antriebe und/oder Werkzeuge zum Einsatz kommen. Insbesondere kann der Polierantrieb 4C auch mehrachsig ausgebildet oder gelagert sein. Beispielsweise kann die Poliereinrichtung 4 aufgebaut sein oder arbeiten, wie in der DE 10 2007 042 667 A1 beschrieben.

Das Polieren erfolgt vorzugsweise durch Läppen, insbesondere also unter Einsatz einer entsprechende Reibkörper enthaltenden Flüssigkeit, wie einer sogenannten Poliermilch o. dgl. Alternativ oder zusätzlich kann das Polieren auch durch Feinschleifen erfolgen. Insbesondere kann anstelle des Läppens auch nur ein reines Feinschleifen zur Endbearbeitung der Linse 2 insbesondere vor einer anschließenden Beschichtung der Linse 2 erfolgen.

Die polierten bzw. endbearbeiteten Linsen 2 werden vorzugsweise beschichtet, insbesondere mittels der Vorrichtung 1 bzw. einer darin angeordneten Beschichtungseinrichtung (diese würde vorzugsweise auch eine Bearbeitungseinrichtung im Sinne der vorliegenden Erfindung darstellen) oder einer sonstigen (nicht dargestellten) Vorrichtung.

Grundsätzlich können Werkstück und Werkzeug bei den beschriebenen Bearbeitungen, insbesondere bei der spanenden bzw. formgebenden Bearbeitung und/oder bei dem Polieren, auch vertauscht bzw. kann eine kinematische Umkehr vorgesehen werden.

Die Vorrichtung 1 weist optional weiter eine Reinigungseinrichtung 5 mit einem Reinigungsraum 5A auf, in dem die zuvor bearbeitete Linse 2 gereinigt werden kann. Die Reinigungseinrichtung 5 ist hier nach bevorzugter Lehre separat - also getrennt von den Einrichtungen 3 und 4 - ausgebildet. Grundsätzlich kann sie auch beispielsweise in die Poliereinrichtung 4 integriert sein.

Vorzugsweise erfolgt das Reinigen manuell, also nicht automatisiert. Beispielsweise wird die noch geblockte Linse 2 oder die von dem zugeordneten Blockstück 2A bereits gelöste Linse 2 nach dem Bearbeiten, insbesondere nach dem spannenden Bearbeiten in der Bearbeitungseinrichtung 3 und/oder nach dem Polieren in der Poliereinrichtung 4, in der Reinigungseinrichtung 5 gereinigt, vorzugsweise gewaschen oder gespült. Jedoch kann das Reinigen bei Bedarf auch automatisiert und/oder selbsttätig und/oder unter Einsatz einer nicht dargestellten Manipuliereinrichtung und/oder einer der Werkstückspindeln 3A oder 4A bzw. Kreuzschlitten erfolgen.

Die Vorrichtung 1 kann alternativ oder zusätzlich eine beispielhaft angedeutete, weitere Bearbeitungseinrichtung 6 mit einem weiteren Bearbeitungsraum 6A oder sogar mehrere weitere Bearbeitungseinrichtungen 6, insbesondere auch für unterschiedliche Zwecke oder Bearbeitungen, aufweisen. In der weiteren Bearbeitungseinrichtung 6 kann beispielsweise ein Beschichten, ggf. auch mehrfaches Beschichten, der insbesondere bearbeiteten Linse 2 erfolgen, wie bereits angesprochen.

Alternativ kann in der weiteren Bearbeitungseinrichtung 6 oder einer zusätzlichen (nicht dargestellten) Bearbeitungseinrichtung ein Aufblocken der Linse 2 auf dem zugeordneten Blockstück 2A und/oder ein Abblocken der Linse 2 und/oder ein Bearbeiten des Linsenrands und/oder des Blockstücks 2A erfolgen. Bezüglich der optionalen Bearbeitung des Blockstücks 2 ist anzumerken, dass hierbei eine insbesondere spanende oder sonstige formgebende Bearbeitung vorgesehen sein kann, beispielsweise um das Blockstück 2A an eine besonders zu bearbeitende Linse 2, beispielsweise mit einem zusätzlichen Prisma zur Korrektur von Strabismus, anzupassen. Diese oder eine sonstige Bearbeitung des Blockstücks 2 kann in der weiteren Bearbeitungseinrichtung 6 oder einer zusätzlichen, nicht dargestellten Bearbeitungseinrichtung und/oder in der Bearbeitungseinrichtung 3 erfolgen, wobei je nach Bedarf auch ein zusätzliches Bearbeitungswerkzeug mit einem ggf. zusätzlichen Antrieb eingesetzt werden kann.

Alternativ kann in der weiteren Bearbeitungseinrichtung 6 oder einer zusätzlichen (nicht dargestellten) Bearbeitungseinrichtung ein Messen oder Vermessen beispielsweise der Linse 2, eines zugeordneten Brillengestells, einer Referenzlinse und/oder eines Werkzeugs erfolgen. Die Linse 2 kann beispielsweise vor und/oder nach einer Bearbeitung oder einem Bearbeitungsschritt vermessen werden. Beispielsweise kann eine bearbeitete Seite, die Vorderseite und/oder Rückseite der Linse 2 und/oder ein Rand oder Randverlauf bzw. Randkantenverlauf der Linse 2 gemessen oder vermessen werden. Bei einem Brillengestell können beispielsweise die Gestellform, die Innenkontur zur Aufnahme der Brillengläser und/oder der Abstand der Brillengläser gemessen werden.

Die Vorrichtung 1 weist eine Steuereinrichtung 7 jedenfalls zum Steuern der formgebenden Bearbeitung der Linse 2 bzw. der Bearbeitungseinrichtung 3 und, so vorhanden, der Poliereinrichtung 4 auf. Die Steuereinrichtung 7 kann auch weitere Einrichtungen 5 und 6 der Vorrichtung 1 steuern. Die Steuereinrichtung 7 ist in Fig. 1 schematisch angedeutet. Einzelheiten der Steuereinrichtung 7 werden weiter unten erläutert.

Die Steuereinrichtung 7 ist eingangsseitig mit einer Eingabeeinrichtung 8 der Vorrichtung 1 versehen bzw. verbunden, die so ausgestaltet ist, dass die gewünschten optischen Daten OD der Linse 2 unmittelbar eingegeben werden können. Die optischen Daten OD, die mit der Eingabeeinrichtung 8 eingegeben werden, werden an die Steuereinrichtung 7 weitergegeben, die daraus vorzugsweise geometrische Daten GD der Linse 2 bestimmt und/oder Linsen-Fertigungsdaten FD bestimmt bzw. erzeugt.

Die Eingabeeinrichtung 8 weist im Ausführungsbeispiel vorzugsweise ein Bedienfeld 8A zur manuellen Eingabe der gewünschten optischen Daten OD und/oder eine Anzeigeeinrichtung 8B, hier in Form eines Bildschirms, insbesondere zur Benutzerführung, auf. Die Eingabeeinrichtung 8 kann bedarfsweise auch einen Touch-Screen alternativ oder zusätzlich zu den Bedienfeld 8A zur Eingabe der gewünschten optischen Daten OD aufweisen. Dieser Touch-Screen kann bedarfsweise durch die Anzeigeinrichtung 8B und/oder einen zusätzlichen Bildschirm gebildet sein. Wichtig ist, dass die Eingabeeinrichtung 8 derart ausgebildet ist, dass die optischen Daten OD auf einfache, gut verständliche Weise eingegeben werden können.

Die Anzeigeeinrichtung 8B dient vorzugsweise einer Benutzerführung bei der Eingabe der gewünschten optischen Daten OD und/oder einer (leichten) Bedienung der Vorrichtung 1. Besonders bevorzugt weist die Vorrichtung 1 nur eine einzige Anzeigeeinrichtung 8B oder nur einen einzigen Bildschirm auf, um einen einfachen, kostengünstigen Aufbau zu ermöglichen und/oder eine besonders einfache Bedienung, auch durch zumindest weitgehend ungeschultes Personal zu ermöglichen oder erleichtern.

Bei der Anzeigeeinrichtung 8B kann es sich bevorzugt um ein Dialogfeld handeln, insbesondere um einen Touch-Screen. Dann ist faktisch das Bedienfeld 8A, das in Fig. 1 als Tastatur angedeutet ist, in den Bildschirm 8B integriert. Selbstverständlich ist auch eine eher traditionelle Ausstattung mit einer (separaten) Tastatur als Bedienfeld 8A ebenfalls möglich.

Angedeutet ist in Fig. 1 auch eine Variante, bei der die Eingabeeinrichtung 8 eine Schnittstelle 8C, insbesondere für eine elektronische Eingabe oder Aufnahme der gewünschten optischen Daten OD aufweist. Hierbei kann es sich beispielsweise um einen Kartenleser, eine Funk-Schnittstelle oder einen elektrischen Anschluss, wie eine USB-Schnittstelle handeln.

Die Vorrichtung 1 bzw. Steuereinrichtung 7 weist vorzugsweise ein Designmodul 7A zur Bestimmung bzw. Erzeugung von geometrischen Daten GD und/oder Fertigungsdaten FD aus den gewünschten optischen Daten OD. Fig. 1 lässt erkennen, wie von der Eingabeeinrichtung 8 die optischen Daten OD vorzugsweise an eine erste Stufe der Steuereinrichtung 7, nämlich an das Designmodul 7A übermittelt werden. Im dargestellten und bevorzugten Ausführungsbeispiel enthält das Designmodul 7A (mindestens) ein Designmodell, mit dessen Hilfe aus den eingegeben optischen Daten OD in einem Bestimmungsvorgang geometrische Daten GD der herzustellenden Linse 2 entwickelt oder erzeugt werden. Das Designmodell oder eine Gruppe von vorzugsweise abgespeicherten Designmodellen führt insbesondere im Designmodul 7A vorzugsweise mit der im allgemeinen Teil der Beschreibung erläuterten Struktur von Algorithmen oder durch eine Näherung, Interpolation o. dgl. zu den geometrischen Daten GD der Linse 2.

Die gewünschten optischen Daten OD wurden bereits in der allgemeinen Beschreibung der Erfindung erläutert bzw. definiert, so dass sich eine diesbezügliche Wiederholung erübrigt. Entsprechendes gilt insbesondere auch für die geometrischen Daten GD, die Fertigungsdaten FD, die Ausgangsdaten AD und einen Freischaltcode FC.

Aus den gewünschten bzw. eingegebenen optischen Daten OD werden die geometrischen Daten GD in einem ersten Schritt und die Fertigungsdaten FD in einem zweiten Schritt oder alternativ auch direkt die Fertigungsdaten FD - ggf. auch unterschiedliche Fertigungsdaten FD für unterschiedliche Bearbeitungsschritte - von der Vorrichtung 1, von der Steuereinrichtung 7 und/oder mittels des Designmoduls 7A bzw. Designmodells ermittelt, bestimmt und/oder erzeugt. Hierbei werden insbesondere auch die Ausgangsdaten AD der zu bearbeitenden Linse 2 bzw. des zu bearbeitenden Linsenrohlings, wie Linsentyp, Größe, Form, Dicke, Linsenmaterial, Brechungsindex, Form einer bereits fertigen Seite, wie der Rückseite 2D, und/oder Art der Verblockung o. dgl., berücksichtigt. Diese Ausgangsdaten AD können bedarfsweise insbesondere über die Eingabeeinrichtung 8 und/oder Schnittstelle 8C, wie in Fig. 1 angedeutet, oder auf sonstige Weise eingegeben und/oder ausgewählt und/oder von der Vorrichtung 1 oder Steuereinrichtung 7 automatisch erfasst oder bestimmt werden. Insbesondere kann die Steuereinrichtung 7 bzw. das Designmodul 7A in Abhängigkeit von diesen Ausgangsdaten AD ein entsprechendes oder geeignetes Designmodell auswählen.

Alternativ oder zusätzlich kann die Vorrichtung 1 bzw. die Steuereinrichtung 7 und/oder das Designmodul 7A derart ausgebildet sein, dass in Abhängigkeit von den optischen Daten OD und/oder den daraus resultierenden geometrischen Daten GD eine Linse 2 bzw. der optimale Linsenrohling bzw. Linsentyp - insbesondere aus einer vorgegebenen oder vorgebbaren Gruppe von verfügbaren Linsen 2 bzw. Linsenrohlingen oder -typen - selbsttätig auswählbar und ggf. dem Bediener insbesondere anzeigbar ist.

Der Bediener kann dann den entsprechenden Linsenrohling in die erste Bearbeitungseinrichtung, hier die Bearbeitungseinrichtung 3 bzw. deren Werkstückspindel 3A bzw. deren Aufnahme 3B einspannen. Sollte der angeforderte Linsenrohling gerade nicht verfügbar sein, kann der Bediener dies vorzugsweise eingeben, so dass dann von der Vorrichtung 1 bzw. Steuerung 7 ein anderer geeigneter Linsenrohling angefordert werden kann. Jedoch sind hier auch andere Abläufe oder Benutzerführungen möglich. Es ist anzumerken, dass der Begriff "Benutzerführung" insbesondere die Führung eines nicht dargestellten Bedieners, besonders bevorzugt über die Anzeigeeinrichtung 8B oder sonstige Einrichtungen, hinsichtlich der Bedienung der Vorrichtung 1 und/oder Zuführung von Verbrauchsmaterialien, Werkzeugen oder dergleichen umfasst.

Das Designmodell ist vorgebbar, eingebbar und/oder änderbar, dies hängt insbesondere von der Ausgestaltung der Steuereinrichtung 7 bzw. des Designmoduls 7A ab. Bevorzugt ist eine bestimmte Gruppe von Designmodellen in der Vorrichtung 1, in der Steuereinrichtung 7 oder im Designmodul 7A gespeichert und aus diesen Designmodellen kann je nach Bedarf ausgewählt werden.

Das Bestimmen von Linsendaten bzw. geometrischen Daten GD aus den optischen Daten OD erfolgt nach bevorzugter Lehre so, dass für jede Linse 2 ein eigener Bestimmungsvorgang für die geometrischen Daten GD bzw. Fertigungsdaten FD erfolgt. Ein separater Bestimmungsvorgang zur Bestimmung der geometrischen Daten GD aus den optischen Daten OD oder direkt der Fertigungsdaten FD aus den optischen Daten OD für jede einzelne Linse 2 ist von besonderer Bedeutung, auch um eine eindeutige Abrechnung generieren zu können. Jeder Bestimmungsvorgang von geometrischen Daten GD bzw. Fertigungsdaten FD wird vorzugsweise als separater Bestimmungsvorgang gezählt und abgerechnet und/oder nur ausgeführt, wenn ein entsprechender Freischaltcode FC oder eine sonstige Freigabe o. dgl. vorliegt. Die Vorrichtung 1 bzw. Steuereinrichtung 7 oder das Designmodul 7A ist vorzugsweise derart ausgebildet, dass ein Bestimmungsvorgang nur nach entsprechender Freigabe ausgeführt und/oder jeder Bestimmungsvorgang gezählt und/oder abgerechnet wird. Die Eingabe oder Erfassung eines entsprechenden Freischaltcodes FC kann insbesondere über die Eingabeeinrichtung 8 bzw. die Schnittstelle 8C oder auf sonstige geeignete Art und Weise erfolgen. Die Erfassung bzw. Eingabe eines Freischaltcodes FC und/oder von Ausgangsdaten AD bzw. von Informationen im eingangs genannten Sinne erfolgt besonders bevorzugt mittels einer Erfassungseinrichtung 12 der Vorrichtung 1, wie in Fig. 1 angeduetet. Hierauf wird später noch näher eingegangen.

Nach bevorzugter Lehre weist die Vorrichtung 1 bzw. Steuereinrichtung 7 vorzugsweise weiter ein Fertigungsmodul 7B auf, mit dem aus den bestimmten geometrischen Daten GD der Linse 2 nun die Fertigungsdaten FD für die Bearbeitungseinrichtung 3 und gegebenenfalls auch für die Poliereinrichtung 4 erzeugt werden. Auch für die weitere Bearbeitungseinrichtungen 5 oder 6 der Vorrichtung 1 können die entsprechenden Fertigungsdaten FD mittels des Fertigungsmoduls 7B erzeugt werden.

Außerdem erfolgt im dargestellten Ausführungsbeispiel eine Aufteilung der Fertigungsdaten FD vorzugsweise in verschiedene Bearbeitungsschritte. Dies kann beispielsweise über eine in Fig. 1 angedeutete Ablaufsteuerung 7C der Vorrichtung 1 bzw. Steuerung 7 oder auf sonstige geeignete Weise, ggf. mittels weiterer Steuereinrichtungen, erfolgen.

In die Vorrichtung 1 bzw. Steuereinrichtung 7 kann ferner eine Benutzerführeinrichtung 7D integriert sein, die dann insbesondere über die Anzeigeeinrichtung 8B der Eingabeeinrichtung 8 die Rückkopplung an den Benutzer bzw. Bediener bzw. die Benutzerführung ermöglicht.

Grundsätzlich ist es auch möglich, die Fertigungsdaten FD ohne den Zwischenschritt der geometrischen Daten GD der Linse 2 direkt aus den gewünschten optischen Daten OD der Linse 2 entstehen zu lassen bzw. zu erzeugen, wie bereits erwähnt. Das hängt insbesondere von der Ausgestaltung und/oder Programmierung der Vorrichtung 1 bzw. Steuereinrichtung 7 ab.

Im dargestellten und bevorzugten Ausfuhrungsbeispiel weist jede einzelne Einrichtung 3, 4, 5 und 6 vorzugsweise eine ihr zugeordnete Einrichtungssteuerung 7E auf. Diese Einrichtungssteuerungen 7E sind im dargestellten und bevorzugten Ausführungsbeispiel vorzugsweise in die jeweilige Einrichtung 3, 4, 5 und 6 integriert. Sie können aber auch zumindest teilweise oder vollständig in die Steuereinrichtung 7 oder sonstige Komponenten der Vorrichtung 1 integriert sein oder davon gebildet sein. Üblicherweise wird es sich bei den Einrichtungssteuerungen 7E um CNC-Steuerungen handeln.

Generell ist anzumerken, dass die Steuereinrichtung 7 durch eine speicherprogrammierbare Steuerung, CNC-Steuerung (numerische bzw. rechnergestüzte Steuerung) oder dergleichen gebildet sein oder enthalten kann und/oder eine derartige Steuerung steuern kann. Die Steuereinrichtung 7 bzw. Teile der Steuerung können auch für die Einrichtungen 3 bis 6 beliebig zusammengefasst und/oder beliebig auf die Einrichtungen 3 bis 6 verteilt oder nur von diesen gebildet sein..

Das dargestellte und bevorzugte Ausführungsbeispiel zeigt die Vorrichtung 1 als kompaktes Bearbeitungszentrum, hier und nach bevorzugter Lehre in oder mit einem gemeinsamen Gehäuse 9. Dadurch ist die erfindungsgemäße Vorrichtung 1 an einer passenden Stelle vorzugsweise komplett mit allen Einrichtungen installierbar. Insbesondere handelt es sich hier um eine kompakte Vorrichtung 1 in Form eines an jedem beliebigen Ort aufstellbaren Bearbeitungszentrums.

Vorzugsweise ist bzw. sind die Steuereinrichtung 7 und/oder die Eingabeeinrichtung 8 in die Vorrichtung 1 bzw. deren Gehäuse 9 fest eingebaut, integriert oder damit fest verbunden und/oder fest daran - insbesondere über ein nicht dargestelltes Kabel - angeschlossen.

Das dargestellte und bevorzugte Ausführungsbeispiel zeigt in Fig. 1 schematisch angedeutet auch noch einen Tank 10, in dem eine erforderliche Flüssigkeit, beispielsweise ein Poliermittel, eine Reinigungsflüssigkeit, ein Kühlschmiermittel o. dgl., bevorratet werden kann. Der Tank 10 kann dementsprechend bedarfsweise auch unterteilt sein. Man kann auch den Tank 10 durch mehrere voneinander getrennte Einzeltanks bilden oder ergänzen.

Schließlich zeigt Fig. 1 schematisch angedeutet auch noch eine Aufnahmeeinrichtung 11, die beispielsweise zur Bevorratung von Werkzeugen, Blockstücken, Linsenrohlingen oder dergleichen dienen kann.

Nach bevorzugter Lehre der Erfindung kann die Vorrichtung 1 auch so ausgestaltet sein, dass der Zustand der Vorrichtung 1 und/oder einzelner Einrichtungen 3 bis 7, 12 der Vorrichtung 1 und/oder sonstige Informationsdaten, wie die Zahl der Bestimmungsvorgänge, die Art oder Anzahl der bearbeiteten Linsen 2 o. dgl., aus der Ferne abfragbar und/oder beeinflussbar sind. Das dient insbesondere der Überwachung oder Wartung, ist insbesondere jedoch nicht für den laufenden Betrieb der Vorrichtung 1 bestimmt. Dazu können dann entsprechende Schnittstellen zum Anschluss an das Internet, an ein Telfonnetz oder Funknetz (beispielsweise über ein vorzugsweise integriertes GSM-Modul) oder sonstige Netze vorgesehen sein. Gegebenenfalls kann hierzu auch die Schnittstelle 8C eingesetzt werden.

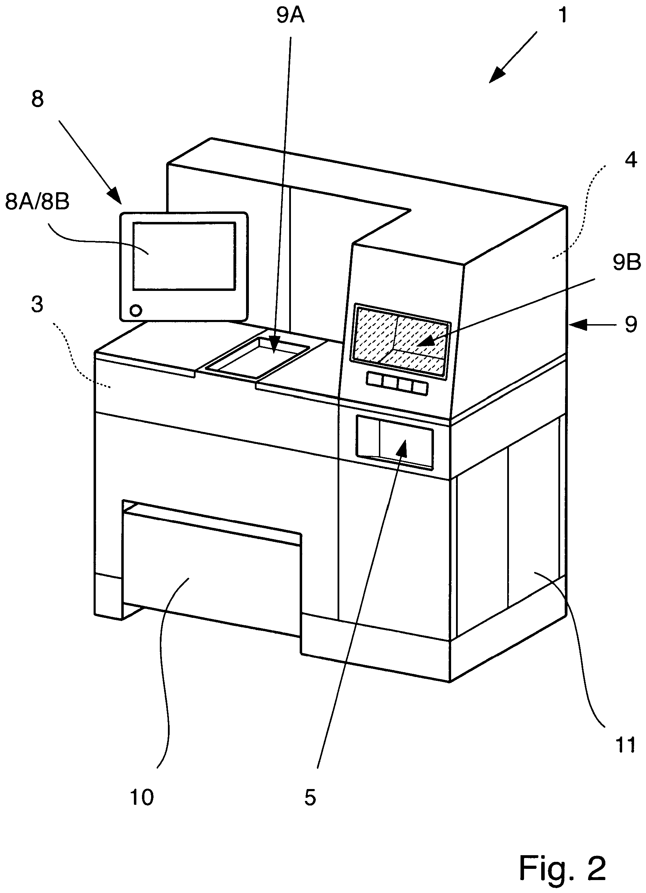

Fig. 2 zeigt in schematischer, perspektivischer Ansicht die erfindungsgemäße Vorrichtung 1 in einer möglichen Ausgestaltung in Form eines Bearbeitungszentrums in dem kompakten Gehäuse 9. Das Gehäuse 9 weist vorzugsweise eine Eingabeklappe 9A für die insbesondere darunter im Gehäuse 9 befindliche, hier lediglich angedeutete Bearbeitungseinrichtung 3, auf. Vorzugsweise rechts im Gehäuse 9 ist die Poliereinrichtung 4 angeordnet. Vorne ist im Bereich der Poliereinrichtung 4 eine Eingabeklappe 9B für die Poliereinrichtung 4 am Gehäuse 9 vorgesehen. Alternativ kann die Eingabeklappe 9B beispielsweise auch neben der Eingabeklappe 9A zumindest im Wesentlichen auf gleicher Höhe oder in einer gemeinsamen Ebene und/oder mit zumindest im Wesentlichen gleicher Orientierung angeordnet sein, wobei die Poliereinrichtung 4 dann vorzugsweise darunter und nicht dahinter angeordnet ist.

Anhand der Darstellung in Fig. 2 ist erkennbar, dass das Umspannen einer Linse 2 bzw. eines Linsenrohlings mit seinem Blockstück 2A von der Bearbeitungseinrichtung 3 in die Poliereinrichtung 4 vorzugsweise manuell, durch eine Bedienungsperson, erfolgt.

Unterhalb der Eingabeklappe 9B bzw. der Poliereinrichtung 4 oder an einer sonstigen geeigneten Stelle ist vorzugsweise eine Öffnung der Reinigungseinrichtung 5 angeordnet. Vorzugsweise unten am Gehäuse 9 ist der Tank 10 angedeutet bzw. angeordnet. Vorzugsweise links oben am Gehäuse 9 befindet sich die Eingabeeinrichtung 8 mit der Anzeigeeinrichtung 8B und/oder dem Bedienfeld 8A, hier insbesondere in Form eines Touch-Screens.

Die Vorrichtung 1 bzw. deren Gehäuse 9 weist vorzugsweise auch die Aufnahmeeinrichtung 11, insbesondere für Werkzeuge, Blockstücke 2A, Linsen 2 bzw. Linsenrohlinge und/oder sonstige Verbrauchsmittel, auf. Die Aufnahmeeinrichtung 11 ist hier beim Darstellungsbeispiel vorzugsweise seitlich angeordnet.

Wie bereits erwähnt, weist die Vorrichtung 1 vorzugsweise eine Erfassungseinrichtung 12 zum Erfassen der Informationen, insbesondere eines Freischaltcodes FC für die Bestimmung von geometrischen Daten GD und/oder Fertigungsdaten FD der Linse 2 aus gewünschten optischen Daten OD der Linse 2 und/oder zum Erfassen von linsenspezifischen Ausgangsdaten AD auf. Die Erfassungseinrichtung 12 kann insbesondere in die Eingabeeinrichtung 8 integriert oder von dieser gebildet sein, wie bereits erwähnt. Vorzugsweise handelt es sich bei der Erfassungseinrichtung 12 jedoch um eine separate Einrichtung, die besonders bevorzugt aber wiederum in die Vorrichtung 1 integriert oder fest mit dieser verbunden und/oder insbesondere fest an diese angeschlossen oder anschließbar ist.

Die Vorrichtung 1 bzw. Erfassungseinrichtung 12 weist vorzugsweise eine Detektionseinrichtung 12A zum Erfassen der Informationen bzw. eines Freischaltcodes FC und/oder der Ausgangsdaten AD auf. Beispielsweise kann diese einen Lesekopf, einen Sensor, eine Kamera oder dergleichen aufweisen oder dadurch gebildet sein.

Die Detektionseinrichtung 12A ist vorzugsweise in die Vorrichtung 1 oder Erfassungseinrichtung 12 integriert oder fest mit dieser verbunden und/oder insbesondere fest an diese angeschlossen oder anschließbar.

Die Erfassungseinrichtung 12 bzw. Detektionseinrichtung 12A ist insbesondere derart ausgebildet, dass die Informationen bzw. ein Freischaltcode FC bzw. die Ausgangsdaten AD optisch, magnetisch, elektromagnetisch und/oder auf sonstige geeignete Art und Weise erfasst, ausgelesen und/oder detektiert werden können. Die von der Detektionseinrichtung 12A detektierten bzw. erfassten Daten werden beispielsweise von der Erfassungseinrichtung 12 verarbeitet, insbesondere dahingehend, dass die Informationen bzw. ein Freischaltcode FC und/oder Ausgangsdaten AD ausgegeben und insbesondere an die Vorrichtung 1 bzw. die Steuereinrichtung 7 oder sonstige Komponenten oder Einrichtungen weitergeleitet werden, wie in Fig. 1 schematisch angedeutet. Insbesondere kann die Erfassungseinrichtung 12 die Detektionseinrichtung 12A in geeigneter Weise steuern.

Die Erfassungseinrichtung 12 bzw. Detektionseinrichtung 12A kann separat von den anderen Einrichtungen der Vorrichtung 1 angeordnet oder einer Einrichtung, insbesondere der Bearbeitungseinrichtung 3, oder einer Aufnahme 3B bzw. 4B zugeordnet oder daran bzw. darin angeordnet sein.

Insbesondere ist die Vorrichtung 1 bzw. die Erfassungseinrichtung 12 bzw. die Detektionseinrichtung 12A derart ausgebildet, dass die Informationen bzgl. der jeweiligen, zu bearbeitenden Linse 2 selbsttätig oder automatisiert erfasst werden können, beispielsweise wenn die Linse 2 (insbesondere zusammen mit dem zugeordneten Blockstück 2A) in die Nähe der Detektionseinrichtung 12A gebracht und/oder der Aufnahmeeinrichtung 11 zugeführt oder entnommen und/oder von einer der Bearbeitungseinrichtungen 3 bis 6 der Vorrichtung 1 aufgenommen und/oder in eine der Aufnahmen 3B oder 4B aufgenommen oder eingespannt wird. Die Erfassungseinrichtung 12 bzw. deren Detektionseinrichtung 12A ist dann je nach Bedarf vorzugsweise entsprechend in der Nähe angeordnet oder darin integriert.

Bei Bedarf kann die Vorrichtung 1 auch mehrere Detektionseinrichtungen 12A aufweisen, die beispielsweise verschiedenen Bearbeitungseinrichtungen 3, 4 oder sonstigen Einrichtungen 5, 6 der Vorrichtung 1 zugeordnet sind, insbesondere um anhand der dann jeweils erfassten bzw. detektierten Informationen überprüfen oder verifizieren zu können, dass die richtige Linse 2 eingesetzt wurde und/oder die richtige Bearbeitung bzw. Behandlung erfolgt.

Die Informationen können insbesondere auch einer Identifikation der jeweiligen Linse 2 vor und/oder während und/oder nach der Bearbeitung dienen.

Die Informationen oder ein mit den Informationen versehener Informationsträger sind bzw. ist der Linse 2 bzw. dem Blockstück 2A jeweils zugeordnet, insbesondere daran angeordnet oder darauf aufgebracht oder darin integriert. Entsprechende Ausführungsvarianten werden nachfolgend anhand der weiteren Figuren näher erläutert.

Fig. 3 veranschaulicht in einer schematischen Darstellung ein Erfassen von Informationen bzgl. einer zu bearbeitenden Linse 2 bzw. eines Linsenrohlings mittels der Erfassungseinrichtung 12 und Detektionseinrichtung 12A.

Die Linse 2 ist vorzugsweise mit den Informationen, insbesondere einem Freischaltcode FC und/oder (linsenspezifischen) Ausgangsdaten AD, versehen, besonders bevorzugt ist ein Informationsträger 12B mit diesen Informationen versehen und der Linse 2 zugeordnet.

Bei dem Informationsträger 12B handelt es sich insbesondere um einen RFID-Chip oder -Transponder, eine mechanische und/oder optische Kennzeichnung, insbesondere einen Barcode, besonders bevorzugt einen zweidimensionalen Barcode, eine sonstige Kennzeichnung, ein sonstiges Identifikationsmittel oder dergleichen.

Der Informationsträger 12B enthält die Informationen je nach Bedarf in kodierter oder unkodierter Form. Insbesondere ist zumindest der besonders bevorzugt darin enthaltene Freischaltcode FC und/oder eine vorzugsweise eindeutige Identifikation der jeweiligen Linse 2 kodiert.

Die Informationen bzw. Daten, die die Informationen enthalten, werden von der Erfassungseinrichtung 12 bzw. Detektionseinrichtung 12A erfasst oder ausgelesen, insbesondere über einen entsprechenden Signalaustausch, bzw. ein Detektionssignal 12C, wie schematisch in Fig. 3 angedeutet. Diese Daten werden dann vorzugsweise in der Vorrichtung 1 bzw. Erfassungseinrichtung 12 insbesondere hinsichtlich der Informationen bzw. des Freischaltcodes FC und/oder der Ausgangsdaten AD ausgewertet und insbesondere zur Weiterverarbeitung bzw. für den weiteren Betrieb oder Ablauf der Vorrichtung 1 bzw. für andere Komponenten oder Einrichtungen der Vorrichtung 1, wie der Steuereinrichtung 7, zur Verfügung gestellt.

Das vorgenannte Detektieren, Lesen bzw. Erfassen der Daten von dem Informationsträger 12B erfolgt insbesondere optisch, durch Funk, magnetisch, elektromagnetisch und/oder auf sonstige geeignete Art und Weise. Beispielsweise wird ein RFID-Chip oder -Transponder als Informationsträger 12B per Funk bzw. über ein RFID-Signal ausgelesen. Beispielsweise wird eine optische Kennzeichnung oder ein Barcode als Informationsträger 12B optisch erfasst oder gescannt. Beispielsweise kann es sich bei dem Informationsträger 12B auch um einen sonstigen Chip oder Mikrochip, insbesondere um einen EPROM oder EEPROM, und/oder um einen magnetischen Datenspeicher oder dgl. handeln. Die Vorrichtung 1 bzw. Erfassungseinrichtung 12 bzw. Detektionseinrichtung 12A ist dementsprechend ausgebildet, beispielsweise mit einem entsprechenden RFIF-Empfänger oder Abfragegerät, einer Kamera, einem sonstigen Sensor oder dergleichen versehen.

Der Informationsträger 12B kann beispielsweise fest mit der Linse 2 verbunden oder an dieser angebracht sein, ggf. in einem Bereich, der während der Bearbeitung entfernt wird.

Beim Darstellungsbeispiel ist die Linse 2 vorzugsweise mit einer Schutzfolie 2B, insbesondere auf ihrer der Bearbeitungsseite abgewandten Rückseite versehen. Diese Rückseite ist üblicherweise bereits bearbeitet. Die Schutzfolie 2B dient daher einem Schutz dieser bearbeiteten Rückseite bei der weiteren Bearbeitung der Linse 2 auf der anderen Seite bzw. Vorderseite und/oder bei der Bearbeitung des Randes der Linse 2. Insbesondere schützt die Schutzfolie 2B die Rückseite der Linse 2 im verblockten Zustand gegen Beschädigungen oder dergleichen. Fig. 3 zeigt die Linse 2 im verblockten Zustand. Das zugeordnete Blockstück 2A ist insbesondere mittels eines Blockmaterials 2C, das in Fig. 3 schematisch angedeutet ist, mit der Linse 2, genauer gesagt mit der Rückseite der Linse 2 bzw. der Schutzfolie 2B verbunden.

Beim Darstellungsbeispiel ist der Informationsträger 12B vorzugsweise von der Schutzfolie 2B gebildet oder in diese integriert oder mit dieser verbunden, insbesondere derart, dass bei einem späteren Lösen der Schutzfolie 2B von der Linse 2 der Informationsträger 12B ebenfalls (zwangsweise) von der Linse 2 gelöst und/oder zerstört wird. Alternativ kann der Informationsträger 12B auch die Schutzfolie 2B bilden oder umgekehrt.

Der Informationsträger 12B kann, wie in Fig. 3 nur schematisch angedeutet, wahlweise auf der der Linse 2 zugewandten Seite oder auf der davon abgewandten Seite der Schutzfolie 2B angeordnet sein. Generell ist der Informationsträger 12B dann vorzugsweise sehr flach ausgebildet, so dass insbesondere keine Aufwölbung der Schutzfolie 2B erfolgt. Ggf. kann der Informationsträger 12B auch in eine entsprechende Aussparung oder dgl. eingelassen sein.

Beim Darstellungsbeispiel handelt es sich besonders bevorzugt um einen folienartig ausgebildeten RFID-Chip oder -Transponder als Informationsträger 12B, der insbesondere mit der Schutzfolie 2B unlösbar und/oder ausschließlich verbunden, besonders bevorzugt verklebt oder verschweißt oder darin einlaminiert ist. Jedoch sind auch andere konstruktive Lösungen möglich.

Alternativ kann der Informationsträger 12B auch am Blockstück 2A angeordnet oder in dieses integriert sein, wie in Fig. 3 gepunktet angedeutet.

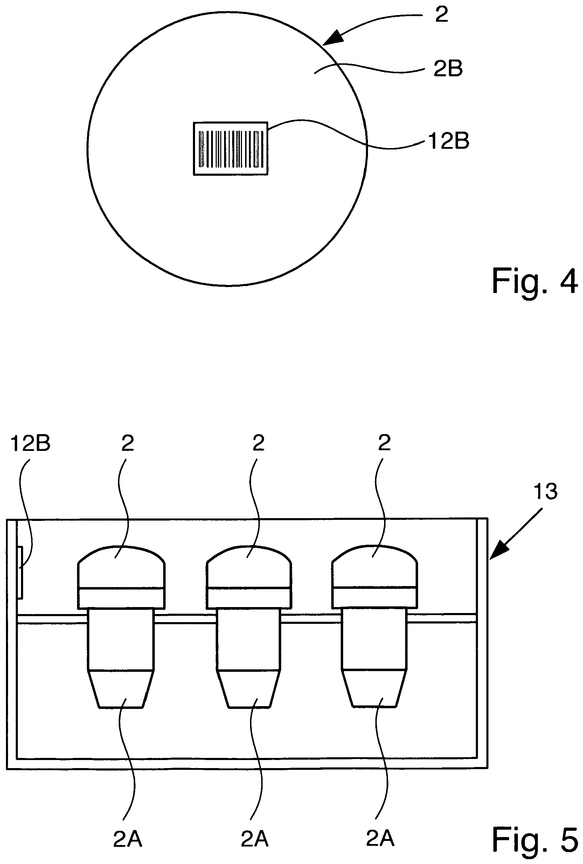

Fig. 4C zeigt in einer schematischen Draufsicht die Linse 2 mit der Schutzfolie 2B, jedoch im nicht geblockten Zustand, also getrennt von dem Blockstück 2A. Der der Linse 2 bzw. Schutzfolie 2B zugeordnete Informationsträger 12B ist hier insbesondere mittig angeordnet und/oder als Barcode ausgeführt.

Nach dem Abblocken und/oder Bearbeiten der Linse 2 und/oder nach einem Beschichten der Linse 2 wird die Schutzfolie 2B vorzugsweise nur zusammen mit dem Informationsträger 12B von der Linse 2 entfernt.

Der Informationsträger 12B ist vorzugsweise derartig angeordnet und/oder ausgebildet, dass dieser nach einem erstmaligen Auslesen und/oder während der Bearbeitung und/oder nach der Bearbeitung unbrauchbar oder unlesbar, insbesondere zerstört, wird.

Vorzugsweise werden die Informationen bzw. Freischaltcodes oder Teile davon nach einem Auslesen, Benutzen, Erfassen oder dgl. und/oder nach dem Bestimmen der geometrischen Daten GD und/oder Fertigungsdaten FD unbrauchbar oder unlesbar gemacht oder gelöscht. Beispielsweise kann ein magnetisches oder elektrisches bzw. elektronisches Löschen von Informationen bzw. des Informationsträgers 12B erfolgen. Der Informationsträger 12B ist dann vorzugsweise dementsprechend ausgebildet. Beispielsweise kann es sich auch um einen Mikrochip, EPROM, EEPROM, magnetischen Speicher, magnetischen Datenträger oder dgl. handeln. Alternativ kann ein Löschen oder Zerstören von Informationen bzw. des Informationsträgers 12B durch die Markiereinrichtung 3G bzw. optisch oder durch Lagereinwirkung, UV-Strahlung oder dgl. erfolgen.

Vorzugsweise ist die Vorrichtung 1, Steuereinrichtung 7 oder Erfassungseinrichtung 12 derart ausgebildet und/oder mit einem Vergleichsmittel, wie einem Vergleicher, mit einem Programm oder dergleichen, versehen um einen erfassten Freischaltcode FC dahin zu überprüfen, ob es sich um einen zulässigen Freischaltcode FC handelt. Die erfolgt insbesondere durch Vergleichen eines mittels der Erfassungseinrichtung 12 erfassten (oder auf sonstige Weise eingegebenen) Freischaltcodes FC mit zulässigen Freischaltcodes FC. Dies zulässigen Freischaltcodes FC sind insbesondere in der Vorrichtung 1 gespeichert oder erzeugbar, beispielsweise durch ein Programm oder ein Algorithmus, oder in einem geeigneten Datenspeicher oder dergleichen abgelegt, auf den die Vorrichtung 1 zugreifen kann. Nur wenn der erfasste bzw. eingegebene Freischaltcode FC mit einem der zulässigen Freischaltcodes übereinstimmt, wird der erfasste bzw. eingegebene Freischaltcode FC als zulässiger Freischaltcode FC angesehen und wird ein Bestimmungsvorgang, also ein Bestimmen von geometrischen Daten GD und/oder Fertigungsdaten, gestattet bzw. ermöglicht.

Vorzugsweise wird ein Bestimmungsvorgang nur nach Erfassung eines entsprechenden bzw. zulässigen Freischaltcodes FC ausgeführt. Besonders bevorzugt ist jener Freischaltcode FC nur einmal zulässig oder verwendbar oder nur für einen einzigen Bestimmungsvorgang einsetzbar und/oder nur in Verbindung mit einer einzigen bestimmten Linse 2 benutzbar. Alternativ oder zusätzlich wird bei der Benutzung des Freischaltcodes FC vorzugsweise eine Identifikation der damit bearbeitenden Linse 2 zugeordnet und eine nochmalige Benutzung des Freischaltcodes FC für eine andere Linse 2 ausgeschlossen. Die Vorrichtung 1 bzw. Steuereinrichtung 7 ist vorzugsweise derart ausgebildet, um die vorgenannte Funktionalität bzw. Funktionalitäten zu ermöglichen.

Vorzugsweise ist für jede Linse 2 ein eigener Bestimmungsvorgang vorgesehen und ein eigener Freischaltcode FC erforderlich.

Vorzugsweise ist das Designmodell aus mehreren Designmodellen durch den Freischaltcode FC und/oder die Ausgangsdaten AD auswählbar.

Vorzugsweise erfolgt das Bearbeiten der jeweiligen Linse 2 und/oder die Erzeugung von geometrischen Daten GD und/oder die Bestimmung von Fertigungsdaten FD nur dann, wenn ein zulässiger Freischaltcode vorliegt bzw. erfasst wurde.

Besonders bevorzugt werden bereits benutzte Freischaltcodes FC ggf. zusammen mit der Identifikation der bearbeiteten Linse 2 gespeichert, um eine nochmalige Verwendung oder Benutzung ausschließen zu können.

Besonders bevorzugt werden nur eindeutige Freischaltcodes FC verwendet, die sich für jede Linse 2 unterscheiden. Jedoch können auch für mehrere Linsen 2 oder Linsentypen oder eine Gruppe von Linsen 2 besondere Freischaltcodes FC vorgesehen sein, die eine entsprechende mehrmalige Benutzung bzw. dementsprechend mehrere Bestimmungsvorgänge für die Linsen 2 ermöglichen.

Alternativ oder zusätzlich können zu der Benutzung des Freischaltcodes FC die Informationen bzw. Ausgangsdaten AD insbesondere zu einer Identifizierung oder Unterscheidung der Linsen 2, zur Überprüfung, ob der richtige Linsentyp verwendet wird oder dergleichen, und/oder für sonstige Zwecke eingesetzt werden. Die Informationen bzw. Ausgangsdaten AD enthalten daher vorzugsweise auch eine eindeutige Identifikation der jeweiligen Linse 2 oder des jeweiligen Linsentyps oder dergleichen.

Grundsätzlich ist es auch möglich, die Informationen, beispielsweise den Freischaltcode FC einerseits und die Ausgangsdaten AD andererseits auf verschiedene Informationsträger 12B und/oder auf verschiedene Arten der Erfassung, beispielsweise Erfassung über die Erfassungseinrichtung 12 bzw. deren Detektionseinrichtung 12A einerseits und die Eingabeeinrichtung 8 andererseits, und/oder auf eine selbsttätige Erfassung einerseits und eine manuelle Erfassung bzw. Eingabe andererseits aufzuteilen. Weiter können auch verschiedenen Arten der Erfassung, beispielsweise einerseits optisch und andererseits magnetisch oder elektromagnetisch gemischt verwendet werden.

Fig. 5 zeigt in einer sehr schematischen Darstellung ein vorschlagsgemäßes Transportbehältnis 13 für eine oder mehrere Linsen 2, insbesondere aufgeblockte Linsen 2, also Linsen 2 mit Blockstücken 2A. Das Transportbehältnis 13 kann bedarfsweise alternativ oder zusätzlich Werkzeuge 3D, 3F und/oder 4D, beispielsweise verschiedene Werkzeuge für verschiedene Bearbeitungen oder Linsen 2 und/oder Werkzeuge zum Ersatz, und/oder sonstige Betriebsmittel, wie Kühlmittel, Poliermittel, Beschichtungsmittel, Reinigungsmittel, Blockmaterial oder dgl., und/oder sonstige Hilfsmittel, wie Handschuhe, Putztücher oder dgl., enthalten.

Besonders bevorzugt handelt es sich bei dem Transportbehältnis 13 um ein Behältnis, das den Benutzer bzw. die Vorrichtung 1 insbesondere mit allen für die Bearbeitung erforderlichen Linsenrohlingen, Materialien und/oder Informationen bzw. den erforderlichen Freischaltcodes oder dgl., zu versorgt. Alternativ oder zusätzlich können die Informationen bzw. Freischaltcodes oder Teile davon auch auf sonstige Weise, beispielsweise per e-mail, SMS, elektronischer Nachricht, Telefon, Telefax, Internetabruf, Funk oder dgl. übermittelt oder bereitgestellt werden.

Beim Darstellungsbeispiel ist das Transportbehältnis 13 vorzugsweise mit den Informationen bzw. einem Informationsträger 12B versehen. Diese Informationen bzw. dieser Informationsträger 12B können bzw. kann beispielsweise einen Freischaltcode FC für alle mit dem Transportbehältnis 13 gelieferten oder darin enthaltenen Linsen 2 oder mehrer entsprechende Freischaltcodes FC und/oder in entsprechender Weise Ausgangsdaten AD bezüglich der Linsen 2 enthalten.

Der Informationsträger 12B kann fest oder unlösbar mit Transportbehältnis 13 verbunden sein. Alternativ kann der Informationsträger 12B auch davon lösbar sein und beispielsweise in die Erfassungseinrichtung 12 oder deren Detektionseinrichtung 12A einsteckbar oder daran anschließbar sein, insbesondere zum Auslesen der darauf enthaltenen Informationen.

Das Auslesen der Informationen bzw. des Informationsträgers 12B des Transportbehältnisses 13 kann beispielsweise auch dadurch erfolgen, dass das Transportbehältnis 13 von der Vorrichtung 1 bzw. deren Aufnahmeeinrichtung 11 aufgenommen wird. In diesem Fall kann das Transportbehältnis 13 bzw. der Informationsträger 12B beispielsweise über entsprechende elektrische Anschlüsse oder dergleichen auslesbar bzw. mit der Vorrichtung 1 bzw. Erfassungseinrichtung 12 bzw. Detektionseinrichtung 12A verbindbar oder daran anschließbar sein.

Es ist auch möglich, dass den einzelnen Linsen 2 im Transportbehältnis 13 jeweils zusätzlich ein eigener Informationsträger 12B zugeordnet ist, so dass zur Bearbeitung der jeweiligen Linse 2 insbesondere sowohl dieser zugeordnete Informationsträger 12B als auch der dem Transposrtbehältnis 13 zugeordnete Informationsträger 12B bzw. die jeweils darin enthaltenen Informationen erforderlich sind.

Generell kann also eine Aufteilung der Informationen bzw. Freischaltcodes auf verschiedene Informationsträger 12B und/oder verschiedene Arten der Erfassung bzw. verschiedene Erfassungseinrichtungen erfolgen.

Alternativ oder zusätzlich kann eine Freischaltung oder Freigabe der Vorrichtung 1 für eine Bestimmung von beispielsweise geometrischen Daten GD und/oder Fertigungsdaten FD und/oder für eine Bearbeitung (zusätzlich) davon abhängig gemacht werden, dass entsprechende Voraussetzungen geprüft oder erfüllt werden, wie das Einlegen eines bestimmten oder erforderlichen Linsentyps oder -rohlings, Bereitstellen erforderlicher Bearbeitungswerkzeuge oder dgl., und/oder von entsprechenden (ggf. manuell einzugebenden) Bestätigungen durch einen Benutzer oder von außen durch Dritte oder dgl.

Generell ist es auch möglich, die Informationen bzw. Freischaltcodes oder Teile davon nach dem Erfassen oder Benutzen zu löschen. Alternativ oder zusätzlich kann der Informationsträger 12B zumindest teilweise zerstört oder unbrauchbar gemacht werden.

**Bezugszeichenliste**

| | | | |
|---|---|---|---|
| 1 | Vorrichtung | 8B | Anzeigeeinrichtung |
| 2 | Linse | 8C | Schnittstelle |
| 2A | Blockstück | 9 | Gehäuse |
| 2B | Schutzfolie | 9A | Eingabeklappe |
| 2C | Blockmaterial | 9B | Eingabeklappe |
| 2D | Vorderseite | 10 | Tank |
| 2E | Rückseite | 11 | Aufnahmeeinrichtung |
| 3 | Bearbeitungseinrichtung | 12 | Erfassungseinrichrung |
| 3A | Werkstückspindel | 12A | Detektionseinrichtung |
| 3B | Aufnahme | 12B | Informationsträger |
| 3C | Drehantrieb | 12C | Detektionssignal |
| 3D | Drehwerkzeug | 13 | Transportbehältnis |
| 3E | Fräsantrieb | B | Drehung |
| 3F | Fräswerkzeug | C | Rundachse |
| 3G | Markiereinrichtung | S | Schwenkbewegung |
| 4 | Poliereinrichtung | W | Linearachse |
| 4A | Werkstückspindel | X | Linearachse |
| 4B | Aufnahme | Z | Linearachse |
| 4C | Polierantrieb | AD | Ausgangsdaten |
| 4D | Polierwerkzeug | FC | Freischaltcode |
| 5 | Reinigungseinrichtung | FD | Fertigungsdaten |
| 5A | Reinigungsraum | GD | geometrische Daten |
| 6 | weitere Bearbeitungseinrichtung | OD | optische Daten |
| 6A | Bearbeitungsraum | | |
| 7 | Steuereinrichtung | | |
| 7A | Designmodul | | |
| 7B | Fertigungsmodul | | |
| 7C | Ablaufsteuerung | | |
| 7D | Benutzerführeinrichtung | | |
| 7E | Einrichtungssteuerung | | |
| 8 | Eingabeeinrichtung | | |
| 8A | Bedienfeld | | |

## Patentansprüche

1. Vorrichtung (1) zum Bearbeiten einer optischen Linse (2),
mit einer Bearbeitungseinrichtung (3) zum spanenden oder sonstigen formgebenden Bearbeiten einer Vorder- und/oder Rückseite (2D, 2E) der Linse (2),
wobei die Vorrichtung (1) oder eine Steuereinrichtung (7) der Vorrichtung (1) ein Designmodul (7A) mit einem Designmodell zum Bestimmen von geometrischen Daten (GD) und/oder Fertigungsdaten (FD) der Linse (2) aus gewünschten optischen Daten (OD) in einem Bestimmungsvorgang aufweist oder verwendet, und
**dadurch gekennzeichnet,**
**dass** die Vorrichtung (1) eine Erfassungseinrichtung (12) zum Erfassen eines Freischaltcodes (FC) aufweist, wobei es sich bei dem Freischaltcode (FC) um eine mehrstellige alphanumerische Zahlenfolge handelt,
wobei in der Vorrichtung (1) mehrere zulässige Freischaltcodes (FC) abgelegt oder gespeichert sind oder mittels eines Algorithmus erzeugbar sind,
wobei die Vorrichtung (1) ein Vergleichsmittel aufweist, um einen mittels der Erfassungseinrichtung (12) erfassten Freischaltcode (FC) mit den zulässigen Freischaltcodes (FC) zu vergleichen,
wobei die Vorrichtung (1) derart ausgebildet ist, dass eine Bestimmung der geometrischen Daten (GD) und/oder Fertigungsdaten (FD) aus den gewünschten optischen Daten (OD) der Linse (2) nur nach Erfassung eines zulässigen Freischaltcodes (FC) erfolgt, und
wobei ein zulässiger Freischaltcode (FC) nur einmal für die Bestimmung der geometrischen Daten (GD) und/oder Fertigungsdaten (FD) für eine Linse (2) verwendbar ist und nur in Verbindung mit einer einzigen bestimmten Linse (2) benutzbar ist.

2. Vorrichtung nach Anspruch 1, **dadurch gekennzeichnet, dass** das Designmodell aus mehreren Designmodellen durch den Freischaltcode (FC) und/oder linsenspezifische Ausgangsdaten (AD) der Linse (2) auswählbar ist.

3. Vorrichtung nach einem der voranstehenden Ansprüche, **dadurch gekennzeichnet, dass** die Bestimmung der geometrischen Daten (GD) und/oder Fertigungsdaten (FD) für eine Linse (2) als ein Bestimmungsvorgang erfasst wird, vorzugsweise wobei für jede Linse (2) ein eigener Bestimmungsvorgang vorgesehen und ein eigener Freischaltcode (FC) erforderlich ist, und/oder wobei ein Freischaltcode (FC) nur für einen einzigen Bestimmungsvorgang verwendbar ist.

4. Vorrichtung nach einem der voranstehenden Ansprüche, **dadurch gekennzeichnet, dass** die Erfassungseinrichtung (12) zum optischen Erfassen eines Freischaltcodes (FC) ausgebildet ist, vorzugsweise wobei die Erfassungseinrichtung (12) eine Detektionseinrichtung (12A) zum optischen Lesen eines Informationsträgers (12), insbesondere Barcodes, zur Erfassung eines Freischaltcodes (FC) aufweist.

5. Vorrichtung nach einem der voranstehenden Ansprüche, **dadurch gekennzeichnet, dass** die Erfassungseinrichtung (12) zum elektromagnetischen Erfassen eines Freischaltcodes (FC) ausgebildet ist, vorzugsweise wobei die Erfassungseinrichtung eine Detektionseinrichtung (12A) zum elektromagnetischen Lesen eines Informationsträgers (12), insbesondere eines RFID-Transponders, aufweist.

6. Vorrichtung nach einem der voranstehenden Ansprüche, **dadurch gekennzeichnet, dass** die Bearbeitungseinrichtung (3) eine Aufnahme (3B) für ein Blockstück (2A) der Linse (2) aufweist, so dass diese aufgeblockt auf dem Blockstück (2A) in die Bearbeitungseinrichtung (3) einsetzbar bzw. einspannbar und bearbeitbar ist, vorzugsweise wobei das Blockstück (2A) mit einem Freischaltcode (FC) für die zugeordnete Linse (2) versehen ist und die Erfassungseinrichtung (12) zu dessen Erfassung ausgebildet und/oder angeordnet ist.

7. Vorrichtung nach einem der voranstehenden Ansprüche, **dadurch gekennzeichnet, dass** die Vorrichtung (1) oder Erfassungseinrichtung (12) zum Erfassen linsenspezifischer Ausgangsdaten (AD) ausgebildet ist, wobei das Blockstück (2A) mit den Ausgangsdaten (AD) für die zugeordnete Linse (2) versehen ist und die Erfassungseinrichtung (12) zu deren Erfassung ausgebildet und/oder angeordnet ist.

8. Vorrichtung nach einem der voranstehenden Ansprüche, **dadurch gekennzeichnet, dass** die Vorrichtung (1) eine Eingabeeinrichtung (8) aufweist, die so ausgestaltet ist, dass unmittelbar die gewünschten optischen Daten (OD) der Linse (2), der Freischaltcode (FC) und/oder Ausgangsdaten (AD) für die zu bearbeitende Linse (2) eingebbar sind.

9. Vorrichtung nach einem der voranstehenden Ansprüche, **dadurch gekennzeichnet, dass** die Vorrichtung (1) derart ausgebildet ist, dass bei Übereinstimmung des erfassten Freischaltcodes (FC) mit einem der zulässigen Freischaltcodes (FC) die Bestimmung der geometrischen Daten (GD) und/oder Fertigungsdaten (FD) für die zugeordnete Linse (2) gestattet wird.

10. Vorrichtung nach Anspruch 9, **dadurch gekennzeichnet, dass** die Vorrichtung (1) derart ausgebildet ist, dass bei keiner Übereinstimmung des erfassten Freischaltcodes (FC) mit einem der zulässigen Freischaltcodes (FC) die Bestimmung der geometrischen Daten (GD) und/oder Fertigungsdaten (FD) für die zugeordnete Linse (2) nicht gestattet wird.

11. Vorrichtung nach einem der voranstehenden Ansprüche, **dadurch gekennzeichnet, dass** die Bearbeitungseinrichtung (3) zur spanenden, insbesondere drehenden und/oder vollflächigen Bearbeitung der Vorder- oder Rückseite (2D, 2E) der Linse (2) in Abhängigkeit von den aus den gewünschten optischen Daten (OD) bestimmten geometrischen Daten (GD) und/oder Fertigungsdaten (FD) ausgebildet ist.

12. Verfahren zum Bearbeiten einer optischen Linse (2),
wobei die zu bearbeitende Linse (2) einer Vorrichtung (1) zugeführt und gewünschte optische Daten (OD) der Linse (2) in die Vorrichtung (1) eingegeben werden,
**dadurch gekennzeichnet,**
**dass** ein Freischaltcode (FC) erfasst wird, wobei es sich bei dem Freischaltcode (FC) um eine mehrstellige alphanumerische Zahlenfolge handelt,
wobei der erfasste Freischaltcode (FC) mit zulässigen Freischaltcodes (FC) verglichen wird, wobei in der Vorrichtung (1) mehrere zulässige Freischaltcodes (FC) abgelegt oder gespeichert sind oder mittels eines Algorithmus erzeugt werden,
wobei nur bei Übereinstimmen des erfassten Freischaltcodes (FC) mit einem zulässigen Freischaltcode (FC) aus den gewünschten optischen Daten (OD) mittels eines Designmodells geometrische Daten (GD) der Linse (2) bestimmt und daraus Fertigungsdaten (FD) erzeugt oder direkt Fertigungsdaten (FD) erzeugt werden,
wobei dann eine Vorder- und/oder Rückseite (2D, 2E) der Linse (2) in Abhängigkeit von den so erzeugten Fertigungsdaten (FD) von der Vorrichtung (1) bearbeitet wird, um die gewünschten optischen Daten (OD) bei der Linse (2) zu erreichen, und wobei ein zulässiger Freischaltcode (FC) nur einmal für die Bestimmung der geometrischen Daten (GD) und/oder Fertigungsdaten (FD) für eine Linse (2) verwendbar ist und nur in Verbindung mit einer einzigen bestimmten Linse (2) benutzbar ist.

13. Verfahren nach Anspruch 12, **dadurch gekennzeichnet, dass** die geometrischen Daten (GD) und/oder Fertigungsdaten (FD) aus den gewünschten optischen Daten (OD) mittels eines Designmodells bestimmt bzw. erzeugt werden, wobei das Designmodell aus mehreren Designmodellen - insbesondere selbsttätig und/oder in Abhängigkeit von verfügbaren Linsen (2) bzw. Linsenrohlingen oder -typen oder Linsenherstellern - ausgewählt wird.

14. Verfahren nach Anspruch 12 oder 13, **dadurch gekennzeichnet, dass** ein Bereich der Linse (2), in dem ein Informationsträger (12B) mit dem Freischaltcode (FC) angeordnet ist, bei der Bearbeitung zerstört oder entfernt wird.

## Claims

1. Apparatus (1) for processing an optical lens (2),
with a processing device (3) for machining or otherwise shaping a front and/or rear side (2D, 2E) of the lens (2),
wherein the apparatus (1) or a control device (7) of the apparatus (1) comprises or uses a design module (7A) comprising a design model for determining geometrical data (GD) and/or manufacturing data (FD) of the lens (2) from desired optical data (OD) in a determination process, and
**characterized**
**in that** the apparatus (1) has an acquisition device (12) for acquiring an activation code (FC), the activation code (FC) being a multi-digit alphanumeric number sequence,
wherein a plurality of permissible activation codes (FC) are stored or saved in the apparatus (1) or can be generated by means of an algorithm,
wherein the appratus (1) comprises a comparison means for comparing an activation code (FC) acquired by means of the acquisition device (12) with the permissible activation codes (FC),
wherein the apparatus (1) is designed in such a way that a determination of the geometrical data (GD) and/or manufacturing data (FD) from the desired optical data (OD) of the lens (2) only takes place after the acquisition of a permissible activation code (FC), and
wherein a permissible activation code (FC) can be used only once for determining the geometric data (GD) and/or manufacturing data (FD) for a lens (2) and can be used only in connection with a single specific lens (2).

2. Apparatus according to claim 1, **characterized in that** the design model is selectable from a plurality of design models by the activation code (FC) and/or lens-specific initial data (AD) of the lens (2).

3. Apparatus according to one of the preceding claims, **characterized in that** the determination of the geometric data (GD) and/or manufacturing data (FD) for a lens (2) is acquired as a determination process, preferably wherein a separate determination process is provided for each lens (2) and a separate activation code (FC) is required, and/or wherein an activation code (FC) can only be used for a single determination process.

4. Apparatus according to one of the preceding claims, **characterized in that** the acquisition device (12) is designed for optically acquiring an activation code (FC), preferably wherein the acquisition device (12) has a detection device (12A) for optically reading an information carrier (12), in particular bar codes, for acquiring an activation code (FC).

5. Apparatus according to one of the preceding claims, **characterized in that** the acquisition device (12) is designed for electromagnetic acquisition of an activation code (FC), preferably wherein the acquisition device has a detection device (12A) for electromagnetic reading of an information carrier (12), in particular an RFID transponder.

6. Apparatus according to one of the preceding claims, **characterized in that** the processing device (3) has a receptacle (3B) for a block piece (2A) of the lens (2), so that the latter can be, while it is blocked onto the block piece (2A), inserted or clamped in the processing device (3) and processed, preferably wherein the block piece (2A) is provided with an activation code (FC) for the associated lens (2) and the acquisition device (12) is designed and/or arranged to acquire it.

7. Apparatus according to one of the preceding claims, **characterized in that** the apparatus (1) or acquisition device (12) is designed to acquire lens-specific initial data (AD), wherein the block piece (2A) is provided with the initial data (AD) for the associated lens (2) and the acquisition device (12) is designed and/or arranged to acquire them.

8. Apparatus according to one of the preceding claims, **characterized in that** the apparatus (1) has an input device (8) which is designed such that the desired optical data (OD) of the lens (2), the activation code (FC) and/or initial data (AD) for the lens (2) to be processed can be input directly.

9. Apparatus according to one of the preceding claims, **characterized in that** the device (1) is designed in such a way that, if the acquired activation code (FC) matches one of the permissible activation codes (FC), the determination of the geometric data (GD) and/or manufacturing data (FD) for the associated lens (2) is permitted.

10. Apparatus according to claim 9, **characterized in that** the device (1) is designed in such a way that, if the acquired activation code (FC) does not match one of the permissible activation codes (FC), the determination of the geometric data (GD) and/or manufacturing data (FD) for the associated lens (2) is not permitted.

11. Apparatus according to one of the preceding claims, **characterized in that** the processing device (3) is designed for machining, in particular turning and/or full-surface machining of the front or rear side (2D, 2E) of the lens (2) depending on the geometric data (GD) and/or manufacturing data (FD) determined from the desired optical data (OD).

12. Method for processing an optical lens (2),
wherein the lens (2) to be processed is fed to an apparatus (1) and desired optical data (OD) of the lens (2) are input into the device (1),
**characterized in that**
**in that** an activation code (FC) is acquired, the activation code (FC) being a multi-digit alphanumeric number sequence,
wherein the acquired activation code (FC) is compared with permissible activation codes (FC), wherein a plurality of permissible activation codes (FC) are stored or saved in the apparatus (1) or are generated by means of an algorithm,
wherein geometric data (GD) of the lens (2) are determined from the desired optical data (OD) by means of a design model only if the detected activation code (FC) matches a permissible activation code (FC) and manufacturing data (FD) are generated therefrom or manufacturing data (FD) are generated directly,
wherein a front and/or back surface (2D, 2E) of the lens (2) is then processed by the apparatus (1) in dependence on the manufacturing data (FD) thus generated to achieve the desired optical data (OD) in the lens (2), and
wherein a permissible activation code (FC) can be used only once for determining the geometric data (GD) and/or manufacturing data (FD) for a lens (2) and can be used only in connection with a single specific lens (2).

13. Method according to claim 12, **characterized in that** the geometrical data (GD) and/or manufacturing data (FD) are determined or generated from the desired optical data (OD) by means of a design model, the design model being selected from a plurality of design models - in particular automatically and/or depending on available lenses (2) or lens blanks or lens types or lens manufacturers.

14. Method according to claim 12 or 13, **characterized in that** an area of the lens (2) in which an information carrier (12B) with the activation code (FC) is arranged, is destroyed or removed during processing.

## Revendications

1. Dispositif (1) d'usinage d'une lentille (2) optique,
comportant un dispositif d'usinage (3) pour usiner par enlèvement de copeaux ou façonner autrement une face avant et/ou arrière (2D, 2E) de la lentille (2),
dans lequel le dispositif (1) ou un dispositif de commande (7) du dispositif (1) comporte ou utilise un module de conception (7A) comportant un modèle de conception pour déterminer des données géométriques (GD) et/ou des données de fabrication (FD) de la lentille (2) à partir de données optiques (OD) souhaitées dans un processus de détermination, et
**caractérisé en ce que**
le dispositif (1) comporte un dispositif d'enregistrement (12) pour enregistrer un code d'activation (FC), dans lequel le code d'activation (FC) est une séquence alphanumérique à plusieurs chiffres,
dans lequel plusieurs codes d'activation (FC) autorisés sont enregistrés ou mémorisés dans le dispositif (1) ou peuvent être générés au moyen d'un algorithme,
dans lequel le dispositif (1) comporte un moyen de comparaison pour comparer un code d'activation (FC) enregistré au moyen du dispositif d'enregistrement (12) avec les codes d'activation (FC) autorisés,
dans lequel le dispositif (1) est conçu de telle sorte que les données géométriques (GD) et/ou les données de fabrication (FD) sont déterminées à partir des données optiques (OD) souhaitées de la lentille (2) uniquement après enregistrement d'un code d'activation (FC) autorisé, et
dans lequel un code d'activation (FC) autorisé ne peut être utilisé qu'une seule fois pour déterminer les données géométriques (GD) et/ou les données de fabrication (FD) pour une lentille (2) et ne peut être utilisé qu'en relation avec une seule lentille (2) déterminée.

2. Dispositif selon la revendication 1, **caractérisé en ce que** le modèle de conception peut être sélectionné parmi plusieurs modèles de conception à l'aide du code d'activation (FC) et/ou des données initiales (AD) spécifiques à la lentille de la lentille (2).

3. Dispositif selon l'une quelconque des revendications précédentes, **caractérisé en ce que** la détermination des données géométriques (GD) et/ou des données de fabrication (FD) pour une lentille (2) est enregistrée en tant que processus de détermination, de préférence dans lequel un processus de détermination propre est fourni pour chaque lentille (2) et un code d'activation (FC) propre est requis, et/ou un code d'activation (FC) ne peut être utilisé que pour un processus de détermination unique.

4. Dispositif selon l'une quelconque des revendications précédentes, **caractérisé en ce que** le dispositif d'enregistrement (12) est conçu pour enregistrer optiquement un code d'activation (FC), de préférence dans lequel le dispositif d'enregistrement (12) comporte un dispositif de détection (12A) pour lire optiquement un support d'informations (12), en particulier des codes-barres, pour détecter un code d'activation (FC).

5. Dispositif selon l'une quelconque des revendications précédentes, **caractérisé en ce que** le dispositif d'enregistrement (12) est conçu pour enregistrer de manière électromagnétique un code d'activation (FC), de préférence dans lequel le dispositif d'enregistrement comporte un dispositif de détection (12A) pour lire de manière électromagnétique un support d'informations (12), en particulier un transpondeur RFID.

6. Dispositif selon l'une quelconque des revendications précédentes, **caractérisé en ce que** le dispositif d'usinage (3) comporte un logement (3B) pour une pièce de bloc (2A) de la lentille (2) de sorte que celle-ci peut être utilisée ou serrée et usinée dans le dispositif d'usinage (3) en étant bloquée sur la pièce de bloc (2A), de préférence dans lequel la pièce de bloc (2A) est pourvue d'un code d'activation (FC) pour la lentille (2) associée et le dispositif d'enregistrement (12) est conçu et/ou disposé pour sa enregistrement.

7. Dispositif selon l'une quelconque des revendications précédentes, **caractérisé en ce que** le dispositif (1) ou le dispositif d'enregistrement (12) est conçu pour enregistrer des données initiales (AD) spécifiques à la lentille, dans lequel la pièce de bloc (2A) est pourvue de données initiales (AD) pour la lentille (2) associée et le dispositif d'enregistrement (12) est conçu et/ou disposé pour sa enregistrement.

8. Dispositif selon l'une quelconque des revendications précédentes, **caractérisé en ce que** le dispositif (1) comporte un dispositif d'entrée (8), lequel est conçu de telle sorte que les données optiques (OD) souhaitées de la lentille (2), le code d'activation (FC) et/ou les données initiales (AD) pour la lentille (2) à usiner peuvent être saisies.

9. Dispositif selon l'une quelconque des revendications précédentes, **caractérisé en ce que** le dispositif (1) est conçu de telle sorte que si le code d'activation (FC) enregistré correspond à l'un des codes d'activation (FC) autorisés, la détermination des données géométriques (GD) et/ou des données de fabrication (FD) pour la lentille (2) associée est autorisée.

10. Dispositif selon la revendication 9, **caractérisé en ce que** le dispositif (1) est conçu de telle sorte que si le code d'activation (FC) enregistré ne correspond pas à l'un des codes d'activation (FC) autorisés, la détermination des données géométriques (GD) et/ou des données de fabrication (FD) n'est pas autorisée pour la lentille (2) associée.

11. Dispositif selon l'une quelconque des revendications précédentes, **caractérisé en ce que** le dispositif d'usinage (3) est conçu pour usiner par enlèvement de copeaux, en particulier usiner par tournage et/ou usiner sur toute la surface de la face avant ou arrière (2D, 2E) de la lentille (2) en fonction des données géométriques (GD) et/ou des données de fabrication (FD) déterminées à partir des données optiques (OD) souhaitées.

12. Procédé d'usinage d'une lentille (2) optique,
dans lequel la lentille (2) à usiner est acheminée vers le dispositif (1) et les données optiques (OD) souhaitées de la lentille (2) sont introduites dans le dispositif (1),
**caractérisé en ce que**
qu'un code d'activation (FC) est enregistré, dans lequel le code d'activation (FC) est une séquence alphanumérique à plusieurs chiffres,
dans lequel le code d'activation (FC) enregistré est comparé à des codes d'activation (FC) autorisés, dans lequel plusieurs codes d'activation (FC) autorisés sont enregistrés ou mémorisés dans le dispositif (1) ou générés au moyen d'un algorithme,
dans lequel, seulement en cas de correspondance du code d'activation (FC) détecté avec un code d'activation (FC) autorisé, à partir des données optiques (OD) souhaitées, au moyen d'un modèle de conception, des données géométriques (GD) de la lentille (2) sont déterminées et des données de fabrication (FD) sont générées à partir de celles-ci ou des données de fabrication (FD) sont directement générées,
dans lequel une face avant et/ou arrière (2D, 2E) de la lentille (2) sont alors usinée(s) par le dispositif (1) en fonction des données de fabrication (FD) ainsi générées pour obtenir les données optiques (OD) souhaitées de la lentille (2), et
dans lequel un code d'activation (FC) autorisé ne peut être utilisé qu'une seule fois pour déterminer les données géométriques (GD) et/ou les données de fabrication (FD) pour une lentille (2) et ne peut être utilisé qu'en relation avec une seule lentille (2) déterminée.

13. Procédé selon la revendication 12, **caractérisé en ce que** les données géométriques (GD) et/ou les données de fabrication (FD) sont déterminées ou générées à partir des données optiques (OD) souhaitées au moyen d'un modèle de conception, dans lequel le modèle de conception est sélectionné parmi plusieurs modèles de conception, en particulier automatiquement et/ou en fonction des lentilles (2) ou des ébauches ou des types de lentilles ou des fabricants de lentilles disponibles.

14. Procédé selon la revendication 12 ou 13, **caractérisé en ce qu'**une zone de la lentille (2), dans laquelle un support d'informations (12B) avec le code d'activation (FC) est disposé, est détruite ou retirée lors de l'usinage.
